# EUROPÄISCHE PATENTSCHRIFT

(11) **EP 3 133 351 B1**
(45) Veröffentlichungstag und Bekanntmachung des Hinweises auf die Patenterteilung: **05.05.2021**
(21) Anmeldenummer: 15779818.2
(22) Anmeldetag: 19.02.2015
(51) Int. Cl.: F24D 3/02, F24D 3/12, F24D 12/02

(54) **HEIZSYSTEM MIT EINEM ENERGIE-UNABHÄNGIGEN MODUS UND MEHRSCHICHTIGEN WASSERSTRÖMUNGEN**
HEATING SYSTEM WITH ENERGY-INDEPENDENT MODE USING MULTIPLE-LAYER STREAMS OF WATER
SYSTÈME DE CHAUFFAGE À MODE DE CONSOMMATION D'ÉNERGIE UTILISANT DES FLUX D'EAU À COUCHES MULTIPLES

(30) Priorität: 15.04.2014 RU 2014114719; 15.04.2014 RU 2014114724; 12.05.2014 RU 2014118847; 17.06.2014 RU 2014124528
(43) Veröffentlichungstag der Anmeldung: 22.02.2017
(73) Patentinhaber: Prusov, Petr Anatolyevich, Serpukhov 142203 (RU)
(72) Erfinder: Prusov, Petr Anatolyevich, Serpukhov 142203 (RU)
(74) Vertreter: Jeck, Anton
(86) Internationale Anmeldenummer: PCT/RU2015/000104
(87) Internationale Veröffentlichungsnummer: WO 2015/160279

(56) Entgegenhaltungen:
- WO-A1-88/02463
- WO-A1-2005/098318
- CN-A- 102 297 469
- DE-C- 425 873
- DE-C1- 10 057 410
- FR-A- 366 790
- RU-A- 2011 138 794
- RU-A- 2012 120 636
- RU-A- 2012 120 636
- RU-A- 2012 125 176
- RU-C- 1 809 251
- RU-C1- 2 272 221
- RU-C2- 2 382 283
- RU-U1- 42 291
- US-B1- 6 299 071

## Beschreibung

### Erfindungsgebiet

Die Erfindung betrifft ein Heizsystem in Zwei-, Drei- bzw. Vier-Etagen-Ausführung mit Anschlussmöglichkeit für Fußbodenheizung, mit einer netzunabhängigen Betriebsart, bei der mehrschichtige Wasserströmungen benutzt werden. Das beanspruchte System dient dazu, einen Umlaufbetrieb sicherzustellen (ist als Umlaufsystem vorgesehen). Die Erfindung bezieht sich auf die Wärmeenergienutzung und dient zur Beheizung mit einem unabhängigen (individuellen) Heizungskessel von verschiedenen Gebäuden, darunter Privathäusern, Einfamilienhäusern und Bürogebäuden. Das Heizsystem ist sowohl in Häusern ohne Gasversorgung als auch in gasbeheizten Häusern besonders nutzvoll, denn es kann in einer netzunabhängigen (energieunabhängigen) Betriebsart arbeiten. In diesem Fall arbeitet das System aufgrund eines sozusagen "natürlichen Kreisumlaufs". Der Umlauf erfolgt jedoch durch die Strömungsdifferenz zwischen Strömungen in einem Rohr. Dabei entstehen zwei Hauptströmungen in der Leitung: der Vorlauf (obere Heiß-, Schnellströmung) und der Rücklauf (untere kältere Langsamströmung), denn der Heizmediumumlauf erfolgt schichtweise: der zirkulierende Wasserinhalt wechselt in einer Richtung automatisch. Dementsprechend erfolgt der Heizmediumumlauf im Heizsystem ununterbrochen, allerdings mit verschiedenen Volumina. Demgemäß wird der Heizkessel beim Einschalten auf Solltemperatur ganz schnell durch die Strömungsdifferenz zwischen Flüssigkeitsströmungen und durch das automatische Umlaufvolumen (Regelung, Anpassung) erwärmt. Dadurch kann Brennstoff gespart werden.

Diese einzigartige Entdeckung wird ausgenutzt, und es wurde gelernt, diesen Prozess zu entwickeln.

Das entdeckte, neue Phänomen ist durch die offizielle Wissenschaft zurzeit noch nicht untersucht: Es geht um einen physikalischen Vorgang der schichtweisen Warmwasserbewegung, um die Kapazitäten der inneren Wasserenergie und um einen physikalischen Widerstand während der Wasserbewegung. Diese neuen, physikalischen Vorgänge erlauben es, das Heizsystem aus einem neuen Blickwinkel zu betrachten.

Auf der Grundlage dieser Erkenntnisse wurde eine neue Richtung bzw. eine große Gesamtheit an neuen Heizsystemen mit einem unabhängigen (individuellen) Heizungskessel entwickelt. Weiter folgt ihre Beschreibung und Beweisführung dafür, woher die angegebene "Energie" stammt. Darüber hinaus wird der genannte "physikalische Vorgang" der Warmwasserbewegung in Rohrleitungen beschrieben und nachgewiesen. Es wird auch der weltweit bekannte Stand der Technik auf dem relevanten, technischen Gebiet dargelegt. Es wird eine neue Art bzw. Richtung von Heizsystemen vorgeschlagen, und zwar: Es gab eine Richtung, die auf dem "natürlichen Kreisumtauf" beruhte. Kurz darauf erschienen Umwälzpumpen, die im Westen entwickelt wurden. Die Heizung schlug eine andere Richtung ein und bekam eine neue Gestaltung, die ebenfalls von westlichen Entwicklern vorgeschlagen und geprägt war. Diese wird nachher als "westliche Technologie" bezeichnet.

Zurzeit findet nur die "westliche Technologie" Anwendung. Wenn auch die Bevölkerung bereit wäre, ein netzunabhängiges (elektrisch unabhängiges) System zu nutzen, ist es veraltet. Es wird deshalb ein neues Heizsystem vorgeschlagen, das auch anwendungsberechtigt ist.

Nachdem das erwärmte Wasser den Heizkessel verlassen hat, steigert es die Energie nun von sich aus. Aber man muss dabei helfen, diesen Prozess zu entwickeln.

Es gibt keine gleichen Häuser, aber Häuser können ähnlich sein.

Bei dieser Erfindung kann sich nicht auf die Berechnungen der Wissenschaftler auf diesem Gebiet gestützt werden, denn alle veröffentlichten Berechnungen sind für eine andere Heizungsart angestellt, und zwar: Die Pumpe treibt das Wasser unter Hochdruck (Zentralheizung durch eine Fernwärmeanlage) hinauf. Gemäß der diesseitigen Lehre erfolgt der Umlauf dank dem "physikalischen Vorgang von Wasser". Wenn auch eine Pumpe zugeschaltet wird, handelt es sich um eine "Umwälzpumpe"; sie baut keinen Druck auf, aber das Heizsystem kann unter Druck stehen. Hier liegen ganz verschiedene Konzepte vor, wenn das Wasser durch eine leistungsstarke Pumpe getrieben wird oder wenn das Heizsystem unter Druck steht.

### Stand der Technik

Beim Heizsystem in Zwei-, Drei- bzw. Vier-Etagen-Ausführung mit Anschlussmöglichkeit für Fußbodenheizung, mit einer netzunabhängigen Betriebsart, bei der mehrschichtige Wasserströmungen genutzt werden und das dazu dient, den Umlaufbetrieb sicherzustellen, handelt es sich um einen ganz neuen Ansatz zur Beheizung der Gebäude, um den Wirkungsgrad zu erhöhen, wobei "physikalische" Energie ausgenutzt wird.

Die DE 425873 offenbart die Merkmale des Oberbegriffs des Anspruchs 1 und betrifft eine Warmwasserheizungsanlage, bei welcher die Umlaufrichtung des Heizmittels bei Pumpenbetrieb und bei Schwerkraftbetrieb dieselbe ist und beim Übergang vom Pumpenheizung auf Schwerkraftheizung durch ein in eine Umlaufleitung eingebautes Rückschlagventil der Durchtritt gestattet wird. Die RU 2012 120636 offenbart ein Heizsystem mit einem Heizkessel einem Expansionsdrang Leitungen und Heizkörpern.

### Wesen der Erfindung

Es wurde praktisch und theoretisch entdeckt und nachgewiesen, dass Flüssigkeit in Leitungen schichtweise fließt: Heißwasser fließt zuoberst mit einer höheren Geschwindigkeit, kälteres Wasser fließt unten mit einer niedrigeren Geschwindigkeit. Um den Umlauf sicherzustellen, wird im Heizsystem eine physikalische Kraft mit einem quasi natürlichen Kreisumlauf benutzt. Aber es handelt sich um ganz verschiedene Konzepte, denn es liegt ein Heizsystem unter Druck vor, weil der Ausdehnungsbehälter sich neben dem Membran-Heizkessel befindet. Darüber hinaus enthält das gefüllte Heizsystem eine Wassersäule (d.h. Wasser in Leitungen), die immer unter Druck steht. Das spezifische Wassergewicht ist oben und unten so gut wie gleich, ähnlich wie bei der Schwerelosigkeit. Das erlaubt es, die physikalische Kraft problemlos zu nutzen. Diese kann bei richtiger Planung erzeugt werden. Folglich kann von einem natürlichen Kreisumlauf keine Rede sein.

Der wissenschaftlichen Literatur ist Folgendes entnehmbar: "Das Heißwasser geht aus dem Heizkessel in den höchsten Punkt des offenen Ausdehnungsbehälters hinauf, der mit Freiluft verbunden ist. Danach fließt das Wasser von oben im Selbstfluss in Gefälle in den Heizkessel". Dementsprechend steht das beanspruchte Heizsystem unter Druck und hat keine Verbindung zur Freiluft im Vergleich zum Heizsystem mit "natürlichem Kreisumlauf".

Der nachgesuchte Schutz ist im Anspruch 1 definiert: Auf Grundlage der Erkenntnisse werden spezifische Entwürfe für Heizungspläne für verschiedene Gebäudearten vorgeschlagen. Das ist eine ganz neue Richtung, die vorher in der Praxis noch nicht verwendet wurde. Beansprucht ist Heizung in Zwei-, Drei- bzw. Vier-Etagen-Ausführung, mit Anschlussmöglichkeit für Fußbodenheizung, mit einer netzunabhängigen Betriebsart, unter Nutzung von mehrschichtigen Wasserströmungen. Dieses Heizsystem ist für Privathäuser und Bürogebäude am besten geeignet.

Der Anspruch 2 bezieht sich auf die "physikalischen Wassereigenschaften im geschlossenen Raum", die diesseits entdeckt wurden und zurzeit wissenschaftlich noch nicht erforscht sind. Die veröffentlichte Patentschrift enthält eine ausführliche Beschreibung hierfür. Diese Heizung wird diesseits mehr als 20 Jahre lang weit benutzt. Es ist nicht möglich, die Erfindung getrennt von der beanspruchten, neuen Lehre über den physikalischen Vorgang zu betrachten, der der Erfindung zugrunde liegt. Gemäß dieser Lehre fließt das Wasser schichtweise in der Leitung: "Das Heißwasser in Form eines schmalen Fadens fließt zuoberst mit höchster Geschwindigkeit. Das heißt, die obige Heißwasserschicht kann den Kessel mehrmals betreten; er wird nachgespeist (erwärmt). Die mittlere Schicht, geschweige denn die untere Wasserschicht, wird in den Kessel nur zum ersten Mal eintreten".

Diesseits wurde das neue Konzept über den physikalischen Vorgang der Warmwasserbewegung, über den physikalischen Widerstand während der Warmwasserbewegung, über die Kapazitäten der inneren Wasserenergie ausgearbeitet. Der Energieerzeugungsvorgang endet nicht mit dem Austritt des Wassers aus dem Kessel. Sind bestimmte Bedingungen geschaffen (die Beschreibung dieser Bedingungen ist unten angeführt), so erzeugt das erwärmte und aus dem Kessel ausgetretene Wasser eine zusätzliche, wasserinterne Energie (in sich selbst). Diese Energie wird erzeugt und zugleich für die Beheizung des Gebäudes verbraucht. Dieses Phänomen kann mit einem ins Wasser geworfenen Stein verglichen werden: Wirft man den Stein richtig, so kann er lange über das Wasser springen, aber dennoch zu Grunde gehen.

Leider kann die beim physikalischen Vorgang erzeugte Energie nicht Perpetuum mobile sein, aber diesen Vorgang kann verlängert werden.

In einem Rohr entstehen eine Heißwasserströmung und eine Kaltwasserströmung. Das Heißwasser strebt nach oben und schiebt das Kaltwasser. Unsere Aufgabe dabei ist es, den Widerstand, der den Umlauf bremst und verhindert, so viel wie möglich zu vermindern und die Wasserbewegungen im Heizsystem so viel wie möglich zu vergrößern. Unter der Hochgeschwindigkeitsströmung wird dabei nicht die Gesamtmasse von Wasser verstanden, dessen Bewegung anhand von Pumpen erzwungen werden kann, sondern es kann der "physikalische Vorgang" genutzt werden, der das Wasser antreibt. Unter der Beseitigung des Widerstands wird kein mechanischer, hydraulischer Widerstand verstanden, sondern der Widerstand, der infolge des "physikalischen Vorgangs" entsteht. Gelingt es, der Entwicklung dieses Prozesses zu verhelfen, so kann eine zusätzliche Energiequelle geschaffen werden, die das Wasser in Bewegung versetzt, um den Umlauf im Heizsystem sicherzustellen. Die ganze Welt gelangte an die Pumpe, und wir gelangen an die "Nutzung der Energie durch das Wasser selbst", wobei diese Energie das Wasser in Bewegung versetzt. Das Wasser kann dabei, richtige Planung vorausgesetzt, die Umwälzpumpe ersetzen und erhöht den Wirkungsgrad der Heizung dank dem natürlichen, automatischen Heizmediumumlaufvorgang. Dieser Prozess besteht darin, dass die Flüssigkeit ohne jegliche Mechanik und Automatik nach Bewegung strebt. Die Geschwindigkeit der Wasserströmungen hängt von der Flammengröße im Heizkessel und von der Planung bzw. Auslegung ab. Das macht es möglich, die Energie (in diesem Fall wird im Heizkessel Gas, Holz, Dieselöl genutzt) sparsam zu verbrauchen. Keine vom Menschen geschaffene Automatik ist imstande, an den automatischen, natürlichen Umlaufvorgang näher zu kommen. Aus diesem Grund kann ein und derselbe Kessel verschiedene Flächen beheizen.

Das Wasser fließt schichtweise in der Leitung. Die heißeste Schicht strebt ständig nach oben und schiebt das Wasser hinaus, welches davor und etwas abgekühlt ist. Es ist dabei merkwürdig, dass das nach oben gestiegene Wasser im Kreis an den gleichen Punkt wieder zurückkommt, allerdings in die untere Schicht, wie ein Perpetuum mobile. Aber hier ist eine Nachspeisung erforderlich. Dank diesem physikalischen Vorgang erfolgt die Zirkulation. Das ist die "Energie", die das Wasser in Bewegung versetzt.

Das ist eine ziemlich genaue Definition dafür, wodurch der Umlauf im beanspruchten Heizsystem erfolgt, und eine ziemlich genaue Definition der Arbeit für die erste und zweite Etage. Um praktisch zu beweisen, dass es eine "physikalische Energie" gibt, betrachte man die "netzunabhängige Heizung". Als Ausdehnungsbehälter kann ein 1-Liter großer druckloser Behälter dienen (ähnlich wie sie auf dem Lande verwendet wurden). Gemäß der wissenschaftlichen Lehre bildet sich bei der Brennstoffverbrennung Energie, die das Wasser nur in den Kessel schiebt; nach dem physikalischen Gesetz fließt das Wasser im Kreis.

Daraus folgt: Gibt es auf seinem Weg den kleinsten Widerstand und eine Möglichkeit, zu entweichen, dann wird das Wasser genau dahin fließen, wo die leichtere Möglichkeit besteht. Man kann verstehen: Befindet sich die Vorlaufverteilung in der Mitte des Gebäudes, so befinden sich die Heizkörper unter dem Fußboden oder oberhalb des Fußbodens der ersten Etage und noch oberhalb dieser Verteilung; dazu gibt es noch eine höhere Etage mit Heizkörpern, vielleicht auch eine weitere Etage. Das heißt, das Wasser (auch das heißeste Wasser) kann ohne jegliches Pumpen um 7-8m oberhalb der Vorlaufverteilung 11 ganz leicht hinaufsteigen. Danach wird die Vorlaufverteilung in einer Schleife mit der Rücklaufverteilung, d.h. mit dem Heizkessel zusammengeschlossen, wobei der Durchmesser praktisch ebenso groß ist. Der Ausdehnungsbehälter ist kann beliebig sein. Es kann sich dabei um solche Ausdehnungsbehälter handeln, die früher auf dem Lande benutzt wurden, oder auch um moderne Anlagen, die das Heizsystem unter Druck halten können. Dabei ist Folgendes ersichtlich: Das Wasser kann in ein zusammengebautes System einfach gefüllt werden. Gemäß dem physikalischen Gesetz gilt: Hier gibt es nur den Heizkessel als Energiequelle, die das Wasser bewegen lässt (schiebt). Dabei wird hier die Vorlaufverteilung 11 mit der unteren Rücklaufverteilung 12 mit einem großen Durchmesser, d.h. mit dem Heizkessel in die Schleife zusammengeschlossen und liegt tiefer. Logischerweise: Wozu soll das Wasser höher hinaufgehen, wenn es kurze Wege gibt? Diese Tatsache beweist, dass es eine (weitere) Energie im erwärmten Wasser gibt außer der Quelle, die das Wasser erwärmt.

Und dann fließt das Heißwasser im Rohr gemäß der diesseitigen Lehre in verschiedenen Strömungen und zwar: Heißeres Wasser fließt oben und kälteres unten. Das Phänomen der schichtweisen Wasserbewegung ist noch im vorigen Jahrhundert praktisch erkannt und verstanden worden: Man beobachtete, dass Gasversorgungsdienste die Häuser ans Gasversorgungsnetz oft mitten im Winter anschlossen. Damals gab es noch keine Frostschutzmittel. Wenn man die Hand ans Rohr während der Inbetriebnahme des Heizsystems beim Frost anlegt, dann kann man deutlich erkennen, wie der schmale Heißwasserfaden im oberen Teil des Rohrs fließt, während das Wasser in der unteren Rohrpartie möglicherweise bereits gefroren ist.

Heutzutage kann dies leicht geprüft werden, denn es gibt mittlerweile Geräte, die die Temperatur in einem Sollpunkt mittels Lasers hochpräzise messen können.

Aus den obigen Ausführungen folgt: Da das Warmwasser im Rohr in verschiedenen Strömungen fließt, geschieht hier ein Vorgang, der in der Wärmetechnik als Vorlauf und Rücklauf bezeichnet wird. Danach ist bewiesen, dass, je höher Temperatur, desto höher die Energie, die das erwärmte Wasser selbst besitzt, bis es kalt ist. Diesseits ist mit Hilfe von modernen Messgeräten in der Praxis vergewissert und bewiesen worden (man soll nicht in die veralteten Lehrbücher schauen, sondern den Messgeräten glauben), dass das Wasser sich schichtweise bewegt, über eine große Kraft verfügt und im geschlossenen Raum nicht in einen Turbulenzzustand wechselt. Da dabei im Rohr Vieles vor sich hingeht (mehrere verschiedene Strömungen mit verschiedenen Geschwindigkeiten), gibt es eine Vorlaufverteilung 11, die sich in der Mitte des Gebäudes befindet. Die Vorlaufverteilung 11 verteilt die Energie an alle Geräte ohne jegliche Ketten. Ihre Aufgabe ist es, eine möglichst große Wasserströmung, die als Vorlauf bezeichnet ist, über sich gehen zu lassen und so viel wie möglich von der Strömung "Rücklauf" in den Heizkessel auszustoßen (möglichst großen Teil der Rücklaufströmung in den Kessel zu verdrängen). Es ist klar, dass, wenn das alles in einem Rohr geschieht, es zwischen verschiedenen Strömungen physikalischen Widerstand geben muss. Die Heizkörper kühlen das Wasser im Heizsystem ab, indem sie ihre Wärme abgeben. Dementsprechend füllt das kältere Wasser die Vorlaufverteilung und die Rücklaufverteilung 12. Es kann passieren, dass die kalten Strömungen den Umlauf unterdrücken. Die Aufgabe besteht darin, den vor sich gehenden physikalischen Vorgang zu begreifen und dabei zu helfen, kalte Strömungen in den Heizkessel abzuleiten. Dadurch wird die Zirkulation verstärkt.

Das Vorstehende lässt Folgendes verstehen: Eine geplante Heizung ist ein ganzheitlicher Organismus. Er besteht aus zahlreichen Modulen, Knotenpunkten, die richtig aufgestellt bzw. eingeordnet werden müssen. Man kann sagen, dass es sich dabei um die Energie handelt, die entstehen kann, wenn bestimmte Bedingungen geschaffen sind. Man muss also diese bestimmten Bedingungen schaffen, die im Abschnitt "Ausführung der Erfindung" beschrieben sind. Es ist ganz einfach: Man kann eine Umwälzpumpe anschließen. Sie erweitert die Kapazitäten der Heizanlage in verzwickten Häusern mit mehreren Ebenen (Mehretagenhäusern) (In der Praxis wird der Hausinhaber diese Pumpe nur selten einschalten, und bei einem Stromausfall wird die Heizung doch weiter funktionieren).

Aufgrund dieser Entdeckungen wurde eine große Auswahl an Heizungen mit einem unabhängigen Heizungskessel entwickelt.

Weltweit gibt es drei Arten von Heizsystemen mit einem unabhängigen Heizungskessel:
1. "Mit natürlichem Kreisumlauf": Das ganze Medium wird in den Dachraum gefördert und dann von oben nach unten über eine Prozesskette verteilt. Diese Anordnung wird in der Praxis so gut wie nie eingesetzt, weil der Wirkungsgrad sehr niedrig ist. Darüber hinaus werden die Häuser zurzeit ohne Dachraum gebaut und haben einfach ein wärmegedämmtes Dach.
2. "Westliche Technologie": Nachdem die im Westen entwickelten Umwälzpumpen erschienen, schlug die Heizung eine andere, neue Richtung ein. Dieses Heizungsverfahren ist heutzutage am weitesten verbreitet. Diese Technologie brachte Umwälzpumpen und neue Stoffe mit. Man braucht nicht mehr darüber nachzudenken, wie die Heizung gestaltet werden muss. Es kommt sogar dahin, dass jeder Heizkörper mit je einer Pumpe versehen wird. Diese Technologie brachte auch importierte Kessel mit sich: Bei sehr tiefen Temperaturen im Winter läuft aber der Heizkessel an der Grenze seiner Kapazitäten, und beim Stromausfall gibt es auch keine Heizung. Wenn keine Stromversorgung vorliegt, ist es nicht möglich, das Heizmedium auf lange Zeit abzulassen, denn der Materialaufwand ist zu groß. Die westliche Heizungstechnologie ist bei großen Flächen ab 400m² unersetzlich.
3. Das vorliegende, neue Heizsystem (diese Richtung und die große Gesamtheit an Heizsystemen ist vor 20 Jahren entwickelt und in der Praxis verwendet worden). Die beanspruchte Heizung mit einer netzunabhängigen Betriebsart kann in beliebigen Regionen eingesetzt werden, vor allem dort, wo es keine Strom- und keine Gasversorgung gibt. Auch für Orte mit vorhandener Gasversorgung ist das neue Heizsystem gut geeignet, denn im Winter sind Stromausfälle gut möglich. Das Heizsystem ist für ziemlich große, beheizbare Flächen von ca. 400m² in vier Etagen, auch mit Fußbodenheizung, gut geeignet. Das System hat sich auch in 600m² großen Häusern gut bewährt. Das beanspruchte Heizsystem sieht auch eine andere Betriebsart vor: Die Heizung kann auch im Zwangsumlauf funktionieren. Diese Betriebsart beruht auf dem alten Verfahren "mit natürlichem Kreisumlauf". Die neue Heizungsanlage unterscheidet sich von der alten Heizung dadurch, dass die Vorlaufverteilung 11 hier nicht im Dachraum sondern unter dem Fußboden oder oberhalb des Fußbodens der ersten Etage, d.h. in der Mitte des Gebäudes, montiert ist. Die Förderung erfolgt gleichzeitig ins Erdgeschoss, in die erste Etage und in die zweite Etage. Dadurch kommt heißeres Wasser in den Heizkessel; folglich braucht es weniger Zeit, um wieder erwärmt zu werden. Die Förderung ins Kellergeschoss erfolgt von der Rücklaufverteilung 12 fürs Erdgeschoss. Die Fußbodenheizung sollte nach Möglichkeit ohne Pumpe oder so ausgeführt werden, dass die Fußbodenheizung die Funktion der Heizung mit netzunabhängiger Betriebsart nicht verhindert. Am besten soll erzielt werden, dass die laufende Fußbodenheizung die Zirkulation in der gesamten Heizanlage unterstützt und diese sogar erhöht, und dass die Beheizung des ganzen Hauses auch beim Stromausfall weiterläuft. Das heißt, die Beheizung soll beim Stromausfall weiter funktionieren, ohne dass jegliche mechanische Handlungen für die Umschaltung auf den unabhängigen Betrieb ausgeführt werden müssen, denn es ist durchaus möglich, dass man während des Stromausfalls im Winter nicht zu Hause ist und dass man über den Stromausfall nicht weiß, um entsprechende Maßnahmen zu ergreifen. Das macht die vorliegende Erfindung besonders überzeugend. Der Einsatz der Fußbodenheizung unterstützt die gesamte Heizanlage und beschleunigt den Umlauf, obwohl die Fußbodenheizung als Pumpenheizung gestaltet ist, während der Umlauf in der Heizanlage des gesamten Hauses netzunabhängig sein kann, d.h. die Pumpe kann abgeschaltet werden. Aus den obigen Ausführungen folgt, dass der Heizkessel heißeres Wasser aufnimmt. Folglich reduziert sich der Aufwand für seine Erwärmung. Darüber hinaus muss man sich Mühe geben, den physikalischen Vorgang in der ersten und in der zweiten Etage zu entwickeln, wo die Energie gleichzeitig erzeugt und durch die Wärmeabgabe verbraucht sein wird. Alle Rohrleitungen können in den Wänden und Fußböden verdeckt sein. Ähnlich wie bei der westlichen Technologie kann die Fußbodenheizung im ganzen Erdgeschoß und/oder im Kellergeschoß montiert werden.

Bei der Montage in vier Etagen sind zwei Umwälzpumpen vorgesehen, die den natürlichen Kreisumlauf nicht stören. Dabei wird eine Pumpe am Heizkessel angebaut: Modul 25 UNK-1-40, UNK-1-50 (wobei UNK für Pumpen-Ventilstand steht). Diese Pumpe kann den Zwangsumlauf oder den netzunabhängigen Umlauf automatisch sicherstellen. Die zweite Pumpe wird im Kellergeschoss 24 aufgestellt. Der Kunde kann die Kapazitäten der Heizung näher betrachten und entscheiden, bei welchen Ausgestaltungen bzw. Wetterbedingungen die Pumpe sinnvoll ist. Es liegt auf der Hand, dass hier sowohl die Standzeit der Pumpe als auch der Stromverbrauch eingespart wird. Darüber hinaus braucht man beim Stromausfall oder bei gar nicht vorhandener Stromversorgung keine Sorge zu haben: Alle Umschaltungen erfolgen automatisch. Es ist keine Montage von teuren Anlagen wie Generator und Automatik erforderlich, die den Generator starten kann, wenn man nicht zu Hause ist.

Ein weiterer Vorteil, der größere Möglichkeiten in einem Gebäude bietet, ist es, dass man so gut wie zwei unabhängige Heizanlagen bekommt: Der obere Teil der Heizung umfasst die drei Etagen, und das Kellergeschoß wird unabhängig betrieben.

Dabei liegen verschiedene Möglichkeiten für die Kesselmontage und verschiedene Anschlussmöglichkeiten für die Fußbodenheizung vor.

Der zirkulierende Wasserinhalt wechselt im neuen Heizsystem automatisch. Er kann sich zu 10-80% wechseln. Daher reichen 20 bis 30min dafür aus, dass die Heizkörper im Heizsystem in einem ganz kalten Haus im Winter richtig heiß werden. Es sei dabei betont, dass dies ohne jegliche Pumpen erreicht wird.

### Funktionsmöglichkeiten der Heizung

Die vorliegende Erfindung ermöglicht es, die kalte Winterzeit in einem großen Haus ohne Gasversorgung (das kommt öfters vor) und bei begrenzter Stromleistung problemlos zu überwinden:
a) Die Umwälzpumpe im Keller kann ausgeschaltet werden. Dann wird das Untergeschoss nicht beheizt. D.h. es wird nur ganz wenig arbeiten, so dass die Energie dafür fast gar nicht verbraucht wird. Auf diese Weise erfolgt der Betrieb im Sommer, Herbst und im Frühling. Es ist auch möglich, die Hähne im Keller vollständig zu schließen.
b) Es ist möglich, die Heizkörper in der zweiten Etage abzusperren, so dass die oberste Etage nicht beheizt wird.
c) Es ist möglich, beliebige Heizkörper in beliebiger Etage abzusperren, damit nur ein oder einige Zimmer beheizt werden. So kann uch den Winter günstig überlebt werden
   2) In der Sommerzeit braucht das ganze Haus nicht beheizt zu sein, aber der Keller (Untergeschoss) muss sogar bei starker Hitze etwas beheizt werden, sonst ist es hier zu feucht. Dafür werden alle Hähne in oberen Etagen geschlossen und nur die Hähne im Keller bleiben offen.
   3) Die Heizung mit netzunabhängiger Betriebsart läuft hervorragend in vier Etagen bei Leichtlastbetrieben (Sparbetrieben) von 25- 40°C am Austritt des Heizkessels. Solche Betriebsarten sind für den Sommer, Herbst und Frühling gut geeignet.
   4) Am Heizkessel wird das Modul 25 angebaut. Dieses Modul kann den Zwangsumlauf bzw. den netzunabhängigen Umlauf automatisch bewerkstelligen. Dabei ist dieses Modul unbedingt notwendig, wenn ein Holzkessel eingesetzt wird (wenn der Strom ausfällt, der Heizkessel angefeuert worden ist und das System nur mit Pumpe betrieben werden kann). Das beanspruchte Heizsystem macht es möglich, den Heizmediumumlauf netzunabhängig automatisch sicherzustellen.
   5) Es ist möglich, neben dem Holzkessel (Gaskessel, wenn flüssiges Fremdgas in Gasflaschen bzw. ein Dieselkessel benutzt wird) auch einen elektrischen Heizkessel aufzubauen. Tagsüber wird dann das ganze Gebäude mit dem Holzkessel beheizt, und nachts wird der elektrische Heizkessel benutzt, um nur bestimmte Räume im Gebäude zu beheizen. So hat man zwei unabhängige Heizungen in einem Gebäude.
   6) Es ist auch möglich, den Hauptkessel im Keller und den elektrischen Kessel eine Etage höher aufzustellen. Das ergibt zwei Heizungen, je nach Wunsch kann die eine oder andere oder beide gleichzeitig eingeschaltet werden.

Das Heizsystem enthält ein Modul 25 (Pumpen-Ventilstand): UNK-1-40, UNK-1-50. Wir erheben zwar keinen Anspruch auf diese Einrichtung, aber es wird empfohlen, diese einzusetzen, denn sie kann die neue Heizanlage zusätzlich unterstützen und zum Komfort beitragen.

Beim Betrieb mit einem unabhängigen Heizungskessel erübrigen sich die Begriffe "Einrohrsystem" und "Zweirohrsystem". Diese gelten nur für die "westliche Technologie". Eine solche Bezeichnung des Heizsystems betraf von Anfang an nur vielgeschossige Wohnhäuser mit Zentralheizung, in denen das Wasser unter Hochdruck gefördert wird. Die Heizung mit dem unabhängigen Kessel ist anders gestaltet. Selbst wenn hier die Pumpe eingesetzt wird, handelt es sich um eine Umwälzpumpe, die keinen Druck aufbaut. Aber das ganze Heizsystem steht unter Druck. Wie kann man dann die neue Heizung beschreiben, wenn hier absolut alles - "Vorlauf" und "Rücklauf" - überhaupt in einem Rohr ist. Niemand wusste ja früher, dass "Vorlauf" im oberen und der "Rücklauf" im unteren Teil eines und desselben Rohrs fließt.

Das neue Heizsystem wurde vor zwanzig Jahren erfunden. Es wurde 1991 zum ersten Mal angewendet. Im Verlauf der Zeit wurde es weitergebildet und vervollständigt. Dank der Anwendung dieser Erfindung werden nicht zwei Heizkessel im Haus verwendet, wie es die Vorschriften der Stadtverwaltung für den Betrieb einer Gaswirtschaft verlangen, sondern nur einer. Der zwanzig Jahre lange Betrieb der neuen Heizung beweist den erreichbaren technischen Effekt. Das ist auch durch die veröffentlichten Artikel in den Zeitungen nachgewiesen, z.B. "Sovet" Nr. 17, 2008, Verfasser Asya Grinkevich; "Oka-Info", 21.02.2011, Verfasser Maxim Ball. Die Fotokopien der Zeitungen sind beigefügt.

Die neue Heizung ist nach diesseitiger Auffassung die weltweit einzige netzunabhängige Heizanlage, die für die Beheizung von ziemlich großen Flächen geeignet ist, abgesehen von alten Projekten, die bereits veraltet sind. Die neue Heizung ist flexibel und lässt den Anschluss von Umwälzpumpen zu.

### Offenbarung der Erfindung

Das neue Heizsystem in Zwei-, Drei-, Vier-Etagen-Ausführung, mit Anschlussmöglichkeit für Fußbodenheizung, mit einer netzunabhängigen Betriebsart, bei dem mehrschichtige Wasserströmungen benutzt werden, dient dazu, den Umlaufbetrieb sicherzustellen. Dabei handelt es sich um einen ganz neuen Ansatz zur Beheizung von Gebäuden. Es ist für Privathäuser und Bürogebäude ausgelegt. Das Heizsystem ist für einen Normalverbraucher konzipiert, der ein Familienhaus bzw. ein Ferienhaus bzw. Landhaus baut. Normalerweise werden dabei 120-350m² große Häuser mit Dachgeschoß (ohne Dachraum) gebaut. Es macht keinen Sinn, bei solchen kleinen Flächen die Heizung nach der "westlichen Technologie" zu gestalten. Der Hauptgrund: Es sind Spannungsunterbrechungen bzw. Schwarzfälle möglich. Zurzeit wird aber die Heizung in allen Häusern nur nach der "westlichen Technologie" eingesetzt. Das liegt daran, dass die früher angewendete Heizung "mit natürlichem Kreisumlauf" nur für eine Etage ausgelegt bzw. geeignet ist. Jetzt gibt es jede Menge Fachleute; jeder davon wird die Heizung auf seine eigene Art und Weise auslegen, aber alle werden unbedingt mindestens eine oder sogar einige Pumpen verwenden. Und natürlich, wenn es dann plötzlich keinen Strom gibt, dann hat man auch keine Heizung. Das ist die "westliche Technologie". Man kann natürlich einen Stromerzeuger dazukaufen, aber das sind unnötige Kosten.

### Vorteile der neuen Heizung:

1. Das Heizsystem sieht ein einfaches, preiswertes und wenig bekanntes Modul 25, den- Pumpen-Ventilstand UNK-1-40, UNK-1-50, vor, das den Zwangsumlauf oder netzunabhängigen Umlauf automatisch sicherstellen kann. Darüber hinaus ist eine Umwälzpumpe im Keller 24 vorgesehen, die im ein- oder ausgeschalteten Zustand mehrere Betriebsarten ermöglichen kann. Es sind vierzehn verschiedene Anschlussoptionen für Fußbodenheizung bei den Häusern in Zwei-, Drei-, Vier-Etagen-Ausführung beischrieben, wobei die Fußbodenheizung netzunabhängig oder in ihrem eigenen geschlossenen Kreis mit ihrer eigener Umwälzpumpe betrieben werden kann und den Umlauf im gesamten Haus unterstützt und erhöht.
2. Die Rohre können in den Wänden und Fußböden verdeckt sein.
3. Der Materialaufwand ist bei der neuen Heizung zweimal niedriger im Vergleich zur "westlichen Technologie". Die meist verbreitete Lösung ist zurzeit das "Zweirohrsystem", bei dem zwei Rohre, Vorlauf und Rücklauf, montiert werden. Die neue Heizung dagegen nutzt die Möglichkeiten der mehrschichtigen Wasserströmung aus, so dass der Vorlauf und der Rücklauf in einem Rohr untergebracht sind. Die teure Automatik erübrigt sich, denn das Heizsystem läuft in einem natürlichen, physikalischen, automatischen Zustand. Es ist von sich aus sehr empfindlich und nimmt den Umlaufvorgang automatisch wahr. Dabei kann die bei der "westlichen Technologie" angewandte Automatik auch montiert werden.
4. Der Wirkungsgrad des neuen Heizsystems ist deutlich höher im Vergleich zu bestehenden Heizsystemen: Wird das ganze Haus als 100% der beheizbaren Fläche betrachtet, so bekommt man folgende Verteilung der aufgewendeten Leistung des Heizkessels: 2. Etage 15%, 1. Etage 35%, Erdgeschoß 50%.
   Die niedrigen Werte für die 1. und 2. Etage lassen sich dadurch erklären, dass hier der "physikalische Vorgang" ausgenutzt wird. Bei vernünftiger Planung wird weniger der vom Heizkessel erzeugten Leistung in den oberen Etagen verbraucht. Das Heizsystem ermöglicht es, ein bis zu 500m² großes Haus im netzunabhängigen Betrieb zu beheizen. Aber um eine gewisse Komfort- und Leistungsreserve sicherzustellen, ist die beheizbare Fläche von max. 400m² vorteilhaft.
   Das bezieht sich allerdings auf den netzunabhängigen Betrieb. Beim Zwangsumlauf ist die Fläche nicht begrenzt.
5. Die "westliche Technologie" setzt den Umlauf des gesamten Wasserinhalts voraus. Bei dem neuen Heizsystem wird der zirkulierende Wasserinhalt automatisch verändert und kann zwischen 10% und 80% variieren. Es ist leicht verständlich, dass, je kleiner die zu erwärmende Wassermenge ist, desto niedriger ist der Aufwand für die Erwärmung. Daher rührt die zusätzliche WirkungsgradSteigerung.
   Um zu verstehen, wie dieser zusätzliche Wirkungsgrad erreicht wird, muss der physikalische Vorgang der Wasserbewegung näher betrachtet werden.
   Vieles davon ist bereits in der Zeitung "Sovet", Nr. 17, 2008, offenbart und beschrieben, und zwar: Das Wasser fließt im Rohr schichtweise, die obere Schicht hat höhere Geschwindigkeit, das kältere Wasser fließt unten mit einer niedrigeren Geschwindigkeit. Manchmal kann das Wasser gar unbeweglich sein. Dementsprechend hat das Wasser in einem und demselben Rohr unterschiedliche Temperaturen zwischen oberen und unteren Schichten.

Was geschieht mit dem Wasser nach dem Austritt aus dem Heizkessel, wenn das Wasser im Rohr sich tatsächlich bewegt: Es liegt ein "Wasservorgang" vor, d.h. leichte und schwere Strömungen bestehen im Rohr ständig, bis sie wieder in den Heizkessel kommen, und dann setzt sich der Vorgang wieder fort. Das Wasser bewegt sich schichtweise. Das Heißwasser fließt als schmaler Faden mit höchster Geschwindigkeit im Rohr zuoberst. D.h., die obige Heißwasserschicht kann den Kessel mehrmals betreten, sie wird nachgespeist (erwärmt). Die mittlere Schicht, geschweige denn die untere Wasserschicht wird in den Kessel nur zum ersten Mal eintreten.

Somit hat man nach dem wärmetechnischen Gesetz sowohl den Vorlauf als auch den Rücklauf in einem Zylinder (einem Rohr). Werden mehrere Heizkörper an das gleiche Rohr angeschlossen, so wird das Bremsmoment des Kaltwassers erhöht. Da das Wasser mit verschiedenen Geschwindigkeiten fließt, kann es vorkommen, dass der durch die Kaltwasserströmung erzeugte Widerstand den Umlauf völlig unterdrückt. Die Aufgabe ist es, den Widerstand so viel wie möglich zu reduzieren. Eine solche Art von Widerstand ist von der Wissenschaft noch nicht erforscht. In der Praxis sieht es wie folgt aus:
Der Heizkörper lässt eine kältere Wasserströmung in die Verteilung wieder austreten und erzeugt somit einen Widerstand, der viel höher ist als der hydraulische, dynamische Widerstand (Durchflusswiderstand). Hier greift die Erfahrung des Erfinders mit seinen jahrelangen praxisgebunden Beobachtungen und vollständiger Einsicht in den physikalischen Vorgang ein.

Im Folgenden wird die Arbeit von Wasser beim Austritt aus dem Heizkesselbetrachtet.

Ist das aus dem Heizkessel führende Rohr ganz senkrecht verlegt, so erfolgt die Wasserbewegung an den Wandungen, während die innere Hauptwassersäule steht (unbeweglich ist) oder sich sehr langsam bewegt. Sobald das Rohr nach 0,5m oder 1 m im Winkel von 45° geneigt ist, verschiebt sich die bewegliche Wasserströmung nach oben. Es entsteht eine Temperaturdifferenz von 10° zwischen Ober- und Unterseite, und zwar unabhängig davon, welche Temperatur am Austritt des Heizkessel vorliegt: 50°, 60° oder- 70°. Weiter geht die Wasserströmung in die waagerechte Lage über und gelangt in die Oberverteilung. Die Temperaturdifferenz zwischen der Ober- und Unterseite im Rohr steigt auf 15°. Sobald das Wasser waagerecht fließt, kann es als eine zusätzliche Energiequelle wirken: Sind bestimmte Bedingungen geschaffen, so kann das Wasser, wenn es an den Heizkörper oder an ein Modul gelangt, wie eine Mini-Pumpe arbeiten. Das ist im Abschnitt "Stand der Technik" oben beschrieben.

Wenn das Wasser sich waagerecht bewegt, entstehen der "Rücklauf" und der "Vorlauf" im Rohr, weil das Wasser in verschiedenen Strömungen fließt. Unter Berücksichtigung der obigen Ausführungen ergibt sich, dass das Wasser nicht vollständig (dass nicht der gesamte Wasserinhalt) umläuft. D.h., es läuft bei einem zu 200I gefüllten System nur die gute Hälfte davon, also ca. 100I um.

In diesem Fall wird das Heizsystem mit netzunabhängiger Betriebsart betrachtet. Es ergibt sich, dass der umlaufende Flüssigkeitsinhalt sich je nach Flammengröße im Heizkessel ändert wie im Automatik-Modus. Allerdings soll betont werden, dass es hier keine Automatik gibt. Ist der Heizkessel angeheizt, so liegt ein geringer Umlauf vor, z.B.: Im 200I großen System ist nur der schmale Faden von 10-20I in Bewegung. Wird die Temperatur des Heizkessels höher, so nimmt der zirkulierende Wasserinhalt zu. Unter dem Wasserinhalt wird die Wassermenge verstanden, die aus dem Heizkessel austritt und wieder zurückfließt und eintritt. Wird eine Umwälzpumpe angeschlossen, wie es früher erwähnt wurde, so läuft nicht der gesamte Wasserinhalt um. Darüber hinaus ist keine Automatik vorhanden, und das Heizsystem läuft quasi automatisch. Es wird selbst je nach Flammengröße im Heizkessel den optimalen Wasserinhalt für den Umlauf wählen.

Es sei betont, dass hier die physikalische Arbeit von Wasser beschrieben ist. Idealerweise kann überhaupt kein Effekt erreicht werden, das hängt davon ab, wie das Heizsystem ausgelegt ist.

Wenn die Umwälzpumpe angeschlossen wird:
1) Es wird der gesamte Wasserinhalt umlaufen, aber je ferner von der Pumpe, desto mehr entfällt auf die physikalische Arbeit von Wasser.
2) Das Wasser wird durch den Heizkessel "fliegen", ohne richtig erwärmt zu werden. Dabei wird ein Überverbrauch von Brennstoff vorliegen. Daher muss keine leistungsstarke Pumpe eingesetzt oder die niedrigste Geschwindigkeit gewählt werden.
3) Es wird ein natürlicher automatischer Vorgang beseitigt, bei dem das Wasser selbst weiß, wie lange es sich im Heizkessel befinden muss, um sich zu erwärmen, und mit welcher Geschwindigkeit es in diesem Abschnitt fließen muss, welcher Inhalt aus dem Kessel austreten soll und welcher Inhalt in diesem Abschnitt umlaufen soll, wobei der Widerstand fein wahrgenommen wird.

Es läßt sich leicht verstehen, dass der Wirkungsgrad bei angeschlossener Pumpe niedrig sein wird. Dabei wird die Möglichkeit der Anwendung der Pumpe im Heizsystem nicht ausgeschlossen. Bei fachkundiger Planung ist sie sogar unverzichtbar.

Bei der Planung der Heizung muss nach der Möglichkeit gesucht werden, den "physikalischen" Widerstand bewusst zu beseitigen, ohne sich auf die Pumpe zu verlassen. Wird die Umwälzpumpe an die neue Heizung angeschlossen, so wird der Unterschied von 2-4° zwischen "Vor- und Rücklauf" bei der neuen Heizung auftreten. Das wird dadurch erreicht, dass hier ein intensiver Umlauf erfolgt, wo das Wasser selbst arbeiten wird, aber nicht immer gut, denn das Wasser muss durch den Heizkessel "durchstreichen" und es schaffen, sich zu erwärmen.

### Anwendungsgebiet

Das Heizsystem in Zwei-, Drei-, Vier-Etagen-Ausführung, mit Anschlussmöglichkeit für Fußbodenheizung, mit einer netzunabhängigen Betriebsart, bei dem mehrschichtige Wasserströmungen benutzt werden, dient dazu, den Umlaufbetrieb sicherzustellen. Dabei handelt es sich um einen ganz neuen Ansatz zur Beheizung von Gebäuden, darunter Privathäusern und Bürogebäuden. Es kann zur Beheizung von beliebigen 400-500m² großen Gebäuden im netzunabhängigen Betrieb angewendet werden. Wird der Zwangsumlauf (unter Einsatz von einer Umwälzpumpe) des Heizsystems betrachtet, so ist die beheizbare Fläche nicht begrenzt. Wird ein elektrischer Heizkessel in beliebiger Bauart gekauft, dann bedeutet das, dass es keine Gasversorgung gibt. Auf solche Häuser entfällt 80% in Russland. Das heißt, dass neben dem elektrischen oder Dieselkessel ein Holzkessel aufgestellt wird. Hier muss man genau überlegen, was für ein Heizsystem gebaut sein muss. Der Holzkessel wird für den Fall aufgestellt, wenn Stromausfälle möglich sind oder Brennstoff gespart werden muss (man stelle sich vor, was passiert, wenn der Holzkessel angezündet ist und die Spannung wieder angelegt wird, und unser Umlauf nur von den Pumpen betrieben werden kann: es kommt zu einer Explosion. Solche Fälle sind in der Praxis häufig zu treffen. Auch bei der Variante mit Gasanschluss ergibt kein Strom keine Wärme.

Kein Planungsbüro kann zurzeit das Projekt für die netzunabhängige Heizung oder Heizung mit netzunabhängiger Betriebsart zum geplanten Haus oder Bürogebäude vorlegen. Aus diesem Grund machen so gut wie keine Planungsbüros Projekte für Heizsysteme. Heute werden fast alle Privathäuser als Häuser mit Dachgeschoß gebaut. Das bedeutet: wärmegedämmtes Dach und kein Dachraum. Die ganze Welt zerbricht sich den Kopf, wie geheizt werden soll, denn man strebt danach, dass die Heizung von der Spannungsversorgung unabhängig ist: Es ist möglich, dass das Netz einfach mal ausfällt oder ein Schwarzfall passiert.

Zurzeit besteht kein deutliches fachkundiges Konzept der Heizungsausiegung. Und wie soll die netzunabhängige Heizung gestaltet werden? Diese Erfindung bietet die einzige Lösung dafür, wie das Problem bekämpft werden kann.

Ein sehr wichtiges Problem für Regierungsstellen ist die Vermeidung von Überschwemmungen der Städte, Siedlungen usw. Der Staat kann diesen nicht vorbeugen. Und bei der Wiederherstellung müssen die ganzen bewohnten Städte neu gebaut werden. Daher wird hiermit gebeten, die dargelegten Projekte für Heizsysteme dem Ministerium für Notfallsituationen Russlands vorzuschlagen. Danach kann aber auch nicht garantiert werden, dass, wenn auch kein Hochwasser kommt, eine Versorgungsspannung vorhanden sein wird.

Im Handelsnetz wird ein Elektrodenkessel GALAN angeboten. Das ist der leistungsstärkste der bekannten, elektrischen Kessel dank seiner superschnellen Erhitzung. Jedoch steht der Heizkessel in schlechtem Ruf, denn er kann nach einem gelegentlichen Heizungsprojekt nicht betrieben werden.

Dieser Heizkessel wird in solche Heizanlagen integriert, in denen er überhaupt nicht läuft, insbesondere im "westlichen" Heizungsprojekt.

Dem Hersteller wird hiermit Hilfe angeboten. Dieser Kessel kann mit dem neuen Heizungsprojekt betrieben werden und viel größere Fläche beheizen, als es vom Herstellerwerk empfohlen wird. Beim Verkauf solcher Heizkessel muss die Betriebsanleitung genaue Anweisungen darüber enthalten, welche Heizung montiert werden muss. In der Praxis kommt es oft so vor, dass der Verbraucher den Kessel kauft und montiert, und dann als unbrauchbar entsorgt.

Kauft der Verbraucher einen Bauentwurf für sein Haus, so möchte er beim Planungsbüro den gesamten vollständigen Unterlagensatz bekommen, darunter auch einen fachkundigen Heizungsplan. Der Verbraucher muss wählen können. Das diesseitige Angebot lautet: "Netzunabhängiges Heizsystem" oder Heizsystem "mit netzunabhängiger Betriebsart".

Diee neue Heizung ist für das Klima in Russland gut geeignet. Viele legen keinen Wert darauf, dass ein unterschiedliches Klima von Bedeutung ist: Im Westen herrscht ausgeprägtes Landklima. Die Temperaturdifferenz zwischen Tag und Nacht erreicht 20 Grad. Daher ist die Anwendung der "westlichen Technologie" drüben sinnvoll: Alles wird automatisch geregelt (Brennstoffeinsparung, Ermittlung der optimalen Heizperiode, die Beheizung erfolgt hauptsächlich nachts). Darüber hinaus hat man tagsüber ziemlich hohe Temperaturen über und nachts etwas unter Null. In der Mittelzone Russlands sind Temperaturschwankungen gleichmäßiger. Es reicht also, auf das Wetter zu achten und die Temperatur am Heizkessel manuell zu regeln. Alternativ kann ein Luftsensor in einem Zimmer montiert werden, der die Heizkesseltemperatur regelt. Darüber hinaus können Hähne an den Heizkörpern eingerichtet werden. Man darf auch nicht vergessen, dass die Frostperioden mit Temperaturen unter Minus 30 Grad in Russland manchmal zwei bis drei Wochen dauern können. Die leistungsschwache "westliche Technologie" kann dann damit nicht zurechtkommen. Wird z.B. ein 100kW-Heizkessel in einem 150m² großen Haus betrieben, so versagt die Anlage unter solchen Wetterbedingungen. Das ist in der Praxis bereits aufgetreten..

Manchmal werden zu viel Neubauten in den Bezirken mit alter Gaswirtschaft errichtet, wobei die Gasleitungen sowie die Gasverteilungsstationen bzw.-netze nur für die ursprüngliche Anzahl der Häuser vor -zig Jahren ausgelegt sind. Dann plötzlich steigt die Belastung, denn viel mehr Häuser entfallen auf dieselbe Rohrleitung, die für solche Belastungen gar nicht ausgelegt ist. Bei bitteren Frösten steigt der Gasverbrauch gewaltig, so dass die Gaswirtschaft den benötigten Gasdruck nicht liefern kann. Folglich fährt der Heizkessel aufgrund des ungenügenden Gasdrucks bei 40-50% seiner Leistung. Darüber hinaus versagen die westlichen Kessel oft bei niedrigen Gasdrücken. Das neue, beanspruchte Heizsystem erlaubt es, solche Verluste auszugleichen und das Gebäude dank dem hohen Wirkungsgrad gut zu beheizen. Jetzt kommt oft vor, dass ein Haus gebaut ist, und der Gasanschluss aufgrund der ungenügenden Leistungskapazität der Gaswirtschaft nicht genehmigt wird.

Wenn das neue, beanspruchte Heizsystem mit netzunabhängiger Betriebsart anerkannt und breit angewendet wird, werden auch russische Kessel, insbesondere AOGV-29, gute Nachfrage haben.

### Beschreibung der Zeichnungen

Die Erfindung wird nun anhand von in Zeichnungen dargestellten Ausführungsbeispielen näher erläutert. Es zeigen:
Fig. 1A Heizsystem-Plan für zwei Etagen mit einer netzunabhängigen Betriebsart;
Fig. 1B Heizsystem-Plan für zwei Etagen mit einem Modul, das sowohl den Zwangsumlauf als auch den netzunabhängigen Umlauf sicherstellen kann;
Fig. 2A Heizsystem-Plan für drei Etagen mit einer netzunabhängigen Betriebsart;
Fig. 2B Heizsystem-Plan für drei Etagen mit einem Modul, das sowohl den Zwangsumlauf als auch den netzunabhängigen Umlauf sicherstellen kann;
Fig. 3A Heizsystem-Plan für vier Etagen mit einem Heizkessel im Erdgeschoß;
Fig. 3B Heizsystem-Plan für vier Etagen mit zwei Heizkesseln im Erdgeschoss;
Fig. 3C Heizsystem-Plan für vier Etagen mit zwei Heizkesseln in verschiedenen Etagen: im Erdgeschoss und im Keller;
Fig. 4A Heizsystem-Plan für zwei Etagen mit Anschluss des FußbodenheizungKreises an die Rücklaufverteilung;
Fig. 4B Heizsystem-Plan für zwei Etagen mit Anschluss des Fußbodenheizungsmoduls an die Rücklaufverteilung des Heizsystem, in die der Vorlauf und der Rücklauf des Fußbodenheizungsmoduls eingespeist sind;
Fig. 4C Anschluss des Fußbodenheizungsmoduls 34 an die Rücklauf-Sammelverteilung 35;
Fig. 5A Heizsystem-Plan für drei Etagen mit Anschluss des Fußbodenheizungskreises an die Rücklaufverteilung im Erdgeschoß;
Fig. 5B Heizsystem-Plan für drei Etagen mit Anschluss des Verteilers Fußbodenheizung im Erdgeschoß mittels Rücklaufstranges von der zweiten Etage;
Fig. 5C Heizsystem-Plan für drei Etagen mit Anschluss des Fußbodenheizungsmoduls, wo der Vorlauf und der Rücklauf des Fußbodenheizungsmoduls eingespeist sind, an den Rücklauf, der von der zweiten Etage nach unten geht;
Fig. 5D Heizsystem-Plan für drei Etagen mit Anschluss des Fußbodenheizungsmoduls, wo der Vorlauf und der Rücklauf des Fußbodenheizungsmoduls eingespeist sind, an die Rücklaufverteilung des Heizsystems;
Fig. 6A Heizsystem-Plan für vier Etagen mit Anschluss des Fußbodenheizungskreises an die Kellerverteilung;
Fig. 6B Heizsystem-Plan für vier Etagen mit Anschluss eines Fußbodenheizungskreises an die Rücklaufverteilung des Erdgeschosses.
Fig. 6C Heizsystem-Plan für vier Etagen mit Anschluss des Verteilers der Fußbodenheizung im Keller an die Kellerverteilung, wobei die Einspeisung vom Rücklauf von der zweiten Etage erfolgt;
Fig. 6D Heizsystem-Plan für vier Etagen mit Anschluss des Verteilers der Fußbodenheizung im Erdgeschoss an die Rücklaufverteilung, wobei die Einspeisung vom Rücklauf von der zweiten Etage erfolgt;.
Fig. 6E Heizsystem-Plan für vier Etagen mit Anschluss des Fußbodenheizungsmoduls, im Erdgeschoß, wo der Vorlauf und der Rücklauf des Fußbodenheizungsmoduls eingespeist sind, an den Rücklauf, der von der zweiten Etage nach unten geht;
Fig. 6F Heizsystem-Plan für vier Etagen mit Anschluss des Fußbodenheizungsmoduls im Keller, wo der Vorlauf und der Rücklauf des Fußbodenheizungsmoduls eingespeist sind, an den Rücklauf, der von der zweiten Etage nach unten geht;
Fig. 6G Heizsystem-Plan für vier Etagen mit Anschluss des Fußbodenheizungsmoduls im Erdgeschoss, wo der Vorlauf und der Rücklauf des Fußbodenheizungsmoduls eingespeist sind, an die Rücklaufverteilung des Heizsystems im Erdgeschoss;.
Fig. 6H Heizsystem-Plan für vier Etagen mit Anschluss des Fußbodenheizungsmoduls im Keller, wo der Vorlauf und der Rücklauf des Fußbodenheizungsmoduls eingespeist sind, an die Kellerverteilung des Heizsystems im Keller;
Fig. 7 Anschlussprinzip für Heizkörper 1 in der ersten und zweiten Etage;
Fig. 8 Anschlussprinzip für End-Heizkörper 2 und Heizkörper 9;
Fig. 9 Heizkörper 5 und 7: eine solche Anschlussart wird in der ersten und zweiten Etage benutzt, wenn die Verteilung abseits des Heizkörpers angeordnet ist;
Fig. 10 Heizkörper 4 und 10: eine solche Anschlussart wird für Heizkörper benutzt, die neben dem Heizkessel angeordnet sind, unter Trennung des Strangs (so dass der (Heizstrang getrennt ist;
Fig. 11 skizzenhafter Darstellungen der Bewegung von Wasserströmungen an den Heizkörpern 2, 3 und 9;
Fig. 12 Anschluss der Heizkörper mit einer Brücke: Einfluss auf den physikalischen Widerstand ja nach dem wie der Heizkörper angeschlossen ist;
Fig. 13 Anschluss der Heizkörper unterStrangtr5ennung: Einfluss auf den physikalischen Widerstand je nachdem, wie der Heizkörper angeschlossen ist;.
Fig. 14 Anschluss des Heizkörpers über einen Bypass: Einfluss auf den physikalischen Widerstand je nachdem, wie der Heizkörper angeschlossen ist;
Fig. 15 Modul 25 (Pumpen-Ventilstand) UNK-1-40, UNK-1-50, welches den Zwangsumlauf oder den netzunabhängigen Umlauf im Automatik-Modus sicherstellen kann;

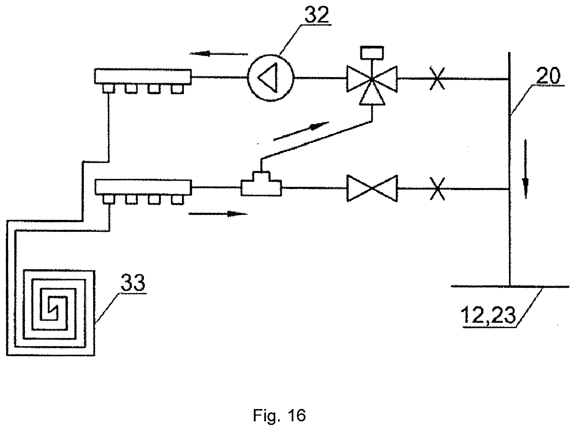

Fig. 16 vergrößerte Darstellung des Fußbodenheizungsmoduls 32;

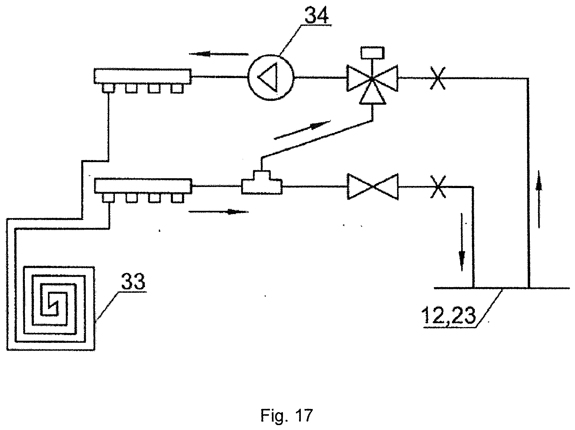

Fig. 17 vergrößerte Darstellung des Fußbodenheizungsmoduls 34.

### Bezugszeichenliste

1 - 10 Heizkörper
11 Vorlaufverteilung
12 Rücklaufverteilung
13 Endstrang im Erdgeschoß, an den Heizkörper 2 angeschlossen
14 Strang im Erdgeschoß, an den Heizkörper 3 angeschlossen
15 Strang im Erdgeschoß, an den Heizkörper 4 angeschlossen
16 Verbindungsrohr für Heizkörper 2.
17 Vorlaufrohr, das Heizkörper 5 und 7 verbindet.
18 Rücklaufrohr, das Heizkörper 5 und 7 verbindet.
19 Vorlaufrohr der Verteilung in der zweiten Etage.
20 Rücklaufrohr der Verteilung in der zweiten Etage.
21 Ausdehnungsbehälter.
22 Hauptheizkessel.
23 Keller-Rücklaufverteilung.
24 Umwälzpumpe im Keller.
25 Modul (Pumpen-Ventilstand), welches den Zwangsumlauf oder den netzunabhängigen Umlauf in Automatik-Modus sicherstellen kann
26 Abschluss-Stränge im Keller, an die Heizkörper 9 angeschlossen werden.
27 Stränge im Keller, an die Heizkörper 10 angeschlossen werden.
28 Vorlaufstrang, der Vorlaufverteilungen 11 vom Heizkessel einspeist.
29 elektrischer Heizkessel.
30 Fußbodenheizungs-Kreis.
31 Verteiler der Fußbodenheizung.
32 Fußbodenheizungs-Modul, das wie folgt verbunden ist: Vorlauf und Rücklauf ohne Trennung, mit einem Rücklaufrohr, das von der zweiten Etage ausgeht.
33 Fußbodenheizungskreis
34 Fußbodenheizungs-Modul, welches wie folgt verbunden ist: Vorlauf und Rücklauf ohne Trennung, mit einem Rohr, in die Rücklaufverteilung und/oder Kellerverteilung
35 Rücklauf-Sammelverteilung.

### Ausführung der Erfindung

Das Heizsystem in Zwei-, Drei-, Vier-Etagen-Ausführung, mit Anschlussmöglichkeit für Fußbodenheizung, mit einer netzunabhängigen Betriebsart, bei dem mehrschichtige Wasserströmungen benutzt werden, dient dazu, den Umlaufbetrieb sicherzustellen und stellt einen ganz neuen Ansatz zur Beheizung von Gebäuden, darunter Privathäusern und Bürogebäuden, dar.

Anhand der Heizungsplanung kann Energie zusätzlich zur Kesselleistung gewonnen werden. Dabei handelt es sich um die Energie, die entsteht, wenn bestimmte Bedingungen geschaffen werden. Die Patentunterlagen beanspruchen die in Zeichnungen dargestellten verschiedenen Ausgestaltungen der Heizsystem-Projekte: In Zwei-, Drei-, Vier-Etagen-Ausführung, mit einer netzunabhängigen Betriebsart. Es sind insgesamt 15 Anschlussmöglichkeiten für Fußbodenheizung beschrieben.

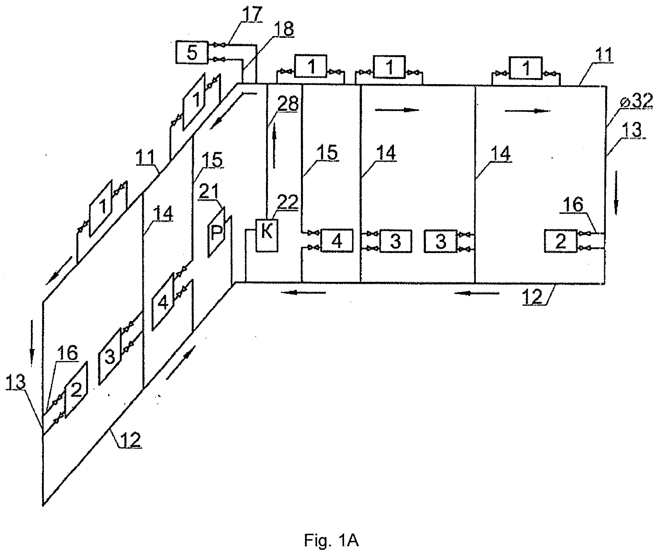

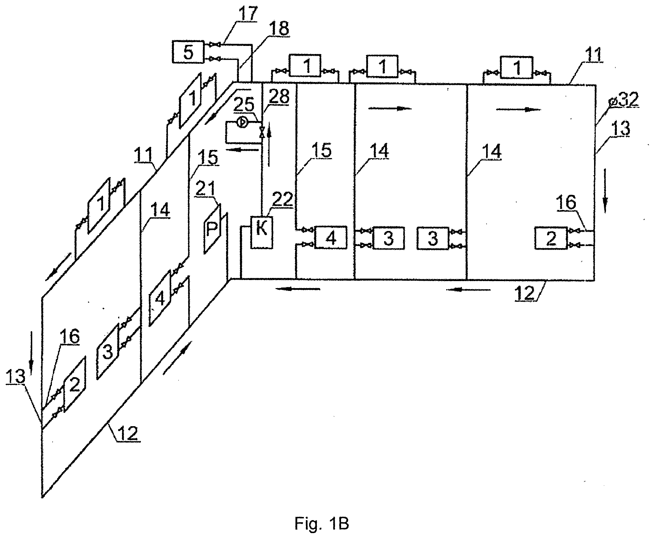

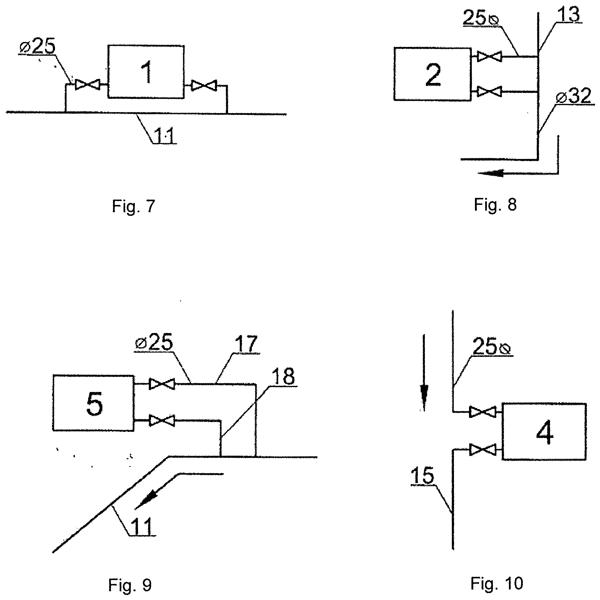

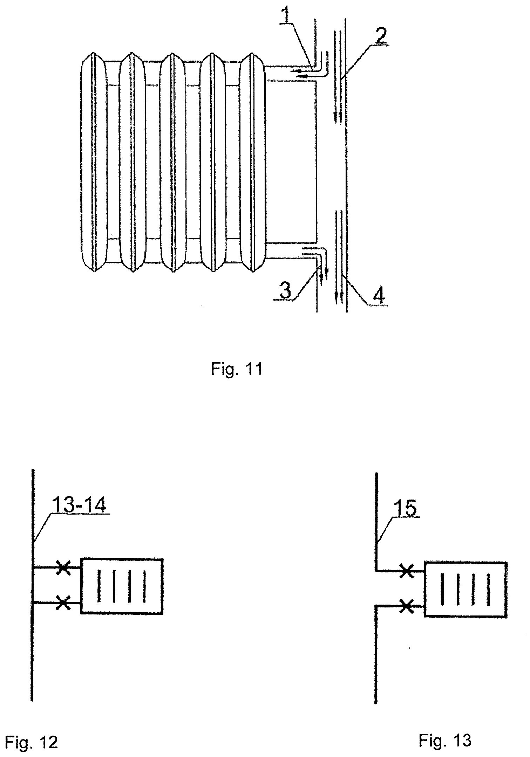

In dieser Patentschrift wird zu erklären versucht, auf welche Weise die physikalischen Möglichkeiten von Energiegewinnung aus Wasser ausgenutzt werden können. Das Wasser bewegt sich als eine mehrschichtige Strömung. Die Heizung besteht aus zahlreichen Modulen. Wenn etwas verändert oder entfernt wird, so wird die gesamte Heizung schlechter oder gar nicht funktionieren.
1. Das beanspruchte Heizsystem kann im netzunabhängigen Modus betrieben werden. D.h., um das Wasser im Heizsystem umlaufen zu lassen, ist keine mechanische Kraft erforderlich, die von einer elektrisch versorgten Pumpe erzeugt wird. Dafür wird ein Modul 25 (Pumpen-Ventilstand UNK-140, UNK-150) in ein aus dem Heizkessel (Vorlaufstrang 28) austretendes Rohr eingebunden. Das Modul 25 kann sowohl den Zwangsumlauf als auch den netzunabhängigen Betrieb in Automatik-Modus sicherstellen. Dabei wird ein vorzugsweise netzunabhängiger Hauptheizkessel 22 gekauft und aufgestellt, denn die Automatik im Heizkessel in diesem Fall bedarf keines Stroms. Das Heizsystem ist universell (flexibel).
   Man kann auch einen elektrischen Heizkessel 29 kaufen und/oder zusätzlich installieren, denn elektrische Kessel können nur mit Zwangsumlauf funktionieren. Bei manchen Kesseln ist die Umwälzpumpe in den Heizkessel eingebaut. Alternativ kann ein zusätzliches breit bekanntes Pumpenmodul montiert werden.
   Das beanspruchte Heizsystem vergrößert noch zusätzlich die durch den Hersteller des Heizkessels angegebene, beheizbare Fläche.
2. Die Vorlaufverteilung 11 wird so tief wie möglich (möglichst unten) angeordnet (der Kessel muss eine gewisse Energie verbrauchen, um das Wasser nach oben zu fördern). Die Vorlaufverteilung 11 wird oberhalb des Fußbodens der ersten Etage montiert oder im Fußboden der ersten Etage verdeckt, auch wenn es die zweite, und die dritte. Etage gibt. Die Vorlaufverteilung 11 wird mittels eines Strangs 13 mit Rücklaufverteilung 12 mit einem großen Durchmesser in die Schleife zusammengeschlossen. Fast alle Ausgestaltungen haben dabei den Durchmesser 32.
3. Die Heizung wird so geplant, dass es mindestens zwei und mehr unabhängige Schleifen gibt, die aus dem Heizkessel über T-Stücke austreten und eigene Verteilungen haben: die Vorlaufverteilung 11, der Strang 13, die Rücklaufverteilung 12-Schleife. In der Zeichnung sind zwei Schleifen gezeigt. Es ist sehr wichtig, dass alles gut ausbalanciert, d.h. in Bezug auf den physikalischen Widerstand richtig berechnet ist, sonst wird der starke Zweig den schwachen unterdrücken. Auch wenn das Heizsystem mit einer Pumpe versehen ist, muss man sich doch an diese Regel halten und versuchen, das System ausbalanciert auszulegen. Das wird dadurch erreicht, dass die Rohrdurchmesser in den Verteilungen im Vergleich zum Vorlaufstrang 28 reduziert werden, der aus dem Heizkessel austritt und mit den Verteilungen Vor- und Rücklauf 11 und 12 verbunden wird. Der Anfangsdurchmesser der Vorlaufverteilung 11 und das Ende der Rücklaufverteilung 12 hängen von dem Auslastungsgrad dieser Schleife hinsichtlich des physikalischen Widerstands ab.
4. Der Heizkessel ist mittels Vorlaufstrangs 28 mit Vorlaufverteilungen 11 verbunden. Je nach Bedarf wird Modul 25 in den Vorlaufstrang 28 eingebunden. Wird ein netzunabhängiger Kessel eingesetzt, so ist der Durchmesser des Vorlaufstrangs 28 bekannt und entspricht dem Durchmesser im Heizkessel. Oder es wird ein energieabhängiger Kessel montiert. Dann haben das Aus- und das Eintrittsrohr des Heizkessels einen Durchmesser von 45-57mm.
5. Die erste Etage: Vorlaufverteilung 11 liegt oberhalb des Fußbodens der ersten Etage oder ist im Fußboden der ersten Etage verdeckt. D.h., dass die Heizkörper 1 höher als die Vorlaufverteilung sind. Daher werden Heizkörper 1 an die Vorlaufverteilung 11 über Kugelhähne angeschlossen: Der Vorlauf und der Rücklauf des Heizkörpers sind vorteilhaft von oben, wie in Figuren Fig. 1A, Fig. 1B, Fig. 7 abgebildet ist, angeschlossen. Das Wesen der Erfindung ist die ganzheitliche Betrachtung des Systems. Damit die Heizkörper 1 gut arbeiten können, und da die Heizung im vorliegenden Fall netzunabhängig betrieben werden kann, ist es sehr wichtig, den Umlauf in der Vorlaufverteilung 11 zu erzeugen und zu steigern. Somit wird der Wirkungsgrad des Heizsystems erhöht. Das ist die grundlegende Idee der gesamten Heizung. Diese Vorgehensweise verursacht die Umlaufzunahme in den Heizkörpern 1, 5, Heizkörpern der zweiten Etage, Heizkörpern des Erdgeschosses und im Keller. Folgendes muss gemacht werden:
   a) Kugelhähne werden unbedingt allen Heizkörpern vorgeschaltet. Es dürfen keine Ventile und automatischen Ventile eingesetzt werden, denn darin ist die Durchmesserunterdrückung von Anfang an voreingestellt.
   b) Der Abschluss-Heizkörper 2 im Erdgeschoss wird über Kugelhähne eingebunden: Das Vorlaufrohr und das Rücklaufrohr des Heizkörpers wird in den Endstrang 13 ohne Strangtrennung eingebunden, siehe Fig. 1A, Fig. 1B und Fig. 8. Dieser Strang hat den Durchmesser 32 fast bei allen Ausgestaltungen.
      Die Erklärung des physikalischen Vorgangs der Wasserbewegung bei solcher Verbindungsart (Heizkörper 2), Fig. 8:
      Die Wasserströmung fließt von oben nach unten. Sie wird durch die Wasserströmung von der ersten1. und zweiten Etage natürlicherweise nachgeschoben. Es ist klar, dass die Bewegung von oben nach unten für Heißwasser naturwidrig ist. Sobald die Wasserströmung einer Möglichkeit begegnet, horizontal zu entweichen (mit dem geringsten Widerstand), macht sie das selbstverständlich. Zuerst wird die Wasserströmung in eine entstandene Brücke (weil Heizkörper 2 in den untrennbaren Strang 13 eingebunden ist, Fig. 8, Fig. 11) gar nicht fließen; anschließend wird so viel Wasser in den Heizkörper eintreten, wie viel gerade benötigt iwird und die gesamte Hauptwasserströmung wird in den Heizkessel mühelos fließen. Dieses Modul wird quasi automatisch arbeiten. Somit wird der Umlauf in der Vorlaufverteilung 11 und folglich die Wasserströmung in den Heizkörpern 1 gesteigert. In der Praxis sieht das wie folgt aus: Wenn die Heizung gerade noch aktiviert ist, sind Heizkörper und Rohre noch kalt. Wenn man das Rohr 16 und die Brücke aus Fig. 11 mit der Hand berührt, sieht man, wohin das Wasser fließt: Die Brücke wird kalt und das Rohr 16 warm sein. Das Modul sei ausführlicher: betrachtet. An der Anschlussstelle des Heizkörpers 2, Fig. 1A, Fig. 1B, Fig. 8, Fig. 11, wird die Vorlaufverteilung 11 mit der Rücklaufverteilung 12 in die Schleife zusammengeschlossen. Die Rücklaufverteilung 12 hat einen ziemlich großen Durchmesser. Die Anschlussstelle zum Heizkörper hat keine Verengungen. Dieser Anschluss (Heizkörper 2) ist in Fig. 11 näher dargestellt. Wie bereits oben erwähnt, fließt das Wasser in verschiedenen Strömungen, wobei Heißwasser schneller ist und Kaltwasser sogar unbeweglich sein kann. Aus Fig. 11 ist ersichtlich, dass die Heißwasserströmung 1 in den Heizkörper eintritt, während Strömung 2 unbeweglich sein oder sich langsam bewegen kann. Allerdings wird die Strömung 2 den Heizkörper nicht betreten. Danach begegnet die Strömung 3 der Strömung 4 am Austritt aus dem Heizkörper. Genau an dieser Stelle entsteht ein gewisser physikalischer Widerstand. Aus den obigen Ausführungen geht hervor, dass das heißeste, hinabfließende Wasser über den Heizkörper passieren wird, und das das kältere Wasser über die Brücke in den Heizkessel fließen wird.
   c) Die vorletzten Heizkörper 3 werden nach dem gleichen Prinzip wie Heizkörper 2 verbunden. Es wird ebenfalls die Schleife zwischen Vorlaufverteilung 11 und Rücklaufverteilung 12 mittels eines Strangs 14 zusammengeschlossen. Der Heizkörper 3 wird in den Strang 14 ohne Trennung eingebunden. Allerdings wird der Durchmesser des Strangs 14 kleiner (Durchmesser 25) im Vergleich zum Strang 13 gestaltet.
   d) Der allererste bzw. die zwei ersten Heizkörper auf dem Weg vom Heizkessel aus werden über Kugelhähne an Heizkörper 4 angeschlossen, wobei der Strang 15 getrennt wird, siehe Fig. 1A, Fig. 1B und Fig. 10. Bei einer solchen Verbindung entsteht ein hoher physikalischer Widerstand. Dadurch bekommt das Wasser die Möglichkeit, über die Vorlaufverteilung 11 möglichst weit bis zum Heizkörper 2 zu fließen.
      Da alle Verfasser der relevanten, veröffentlichen Druckschriften den physikalischen Widerstand beim Betrieb der Heizung nicht betrachten und auch darüber nichts wissen, werden hier weiter unten Ausgestaltungen mit verschiedenen Anschlüssen der Heizkörper gemäß Fig. 12, Fig. 13 und Fig. 14 näher beschrieben:
      Fig. 12: Heizkörper 2, 3 werden in die Stränge 13, 14 eingebunden, welche Vorlaufverteilung 11 und Rücklaufverteilung 12 ohne Strangtrennung in die Schleife zusammenschließen. Das heißeste, von oben kommende Wasser wird über den Heizkörper passieren. Das kältere Wasser wird über den Strang in den Heizkessel fließen. Die Strömungen 3 und 4 (Fig. 11) werden einander begegnen, wobei der Widerstand gering sein wird.
      Fig. 13: Der Heizkörper 4 wird über Kugelhähne in die Trennstelle des Strangs 15 eingebunden. Bei einer solchen Anschlussart entsteht ein hoher Widerstand, denn der Heizkörper enthält eine große Wassermenge. Der Heizkörper gibt seine Wärme ab. Das Wasser kühlt ab. Folglich geht eine ständige Umstellung der Wasserschichten vor sich hin, denn das heißere Wasser füllt den oberen Teil des Heizkörpers. Es bedarf einer gewissen Kraft, um das kältere Wasser aus dem Heizkörper in den Heizkessel zu verdrängen. Das erzeugt den hohen physikalischen Widerstand für den Umlauf.

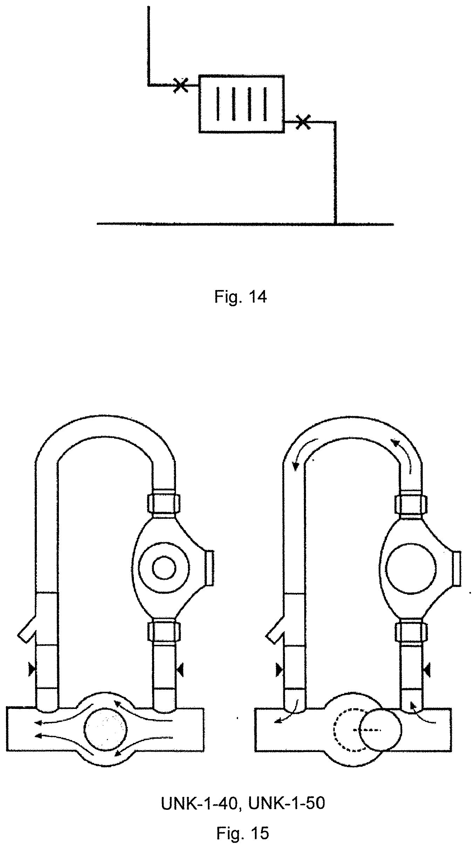

      Fig. 14: Der Heizkörper wird in die Trennstelle des Stranges über einen Bypass oder in den Rücklauf des Heizkörpers an die Rücklaufverteilung über einen Bypass eingebunden. Hier entsteht sogar ein noch höherer physikalischer Widerstand. Alternativ kann auch diese Ausgestaltung benutzt werden: Heiße und kalte Strömungen werden durch den Heizkörper nur über einen Bypass fließen. Das erhöht den physikalischen Widerstand mehrfach.
      Man sollte glauben, was spielt es schon für eine Rolle, wie der Heizkörper angeschlossen wird. "Der Anschluss über einen Bypass ist am besten", so meinen alle Verfasser der veröffentlichten Fachliteratur. In der Wärmetechnik gibt es ein Gesetz:
      Die Temperatur des Heizkörpers hängt von der Geschwindigkeit der geförderten Flüssigkeit ab. Folglich ist davon abhängig, was für einen Wirkungsgrad die Heizung beim geringen Umlauf haben wird (Folglich steht der Wirkungsgrad die Heizung beim geringen Umlauf im direkten Zusammenhang damit): Der Heizkörper ist oben heiß und unten kalt.
   e) Da hier die Heizung mit netzunabhängiger Betriebsart betrachtet wird, erfolgt ihre Funktion ohne Umwälzpumpe. Es ist klar, dass die End-Heizkörper kühler sein werden als die am Anfang. Um diesen Unterschied zu verkleinern, muss der Umlauf verstärkt werden. Die ganze Welt gelangte dabei an die Pumpe, und gemäß der Erfindung wir dagegen an die Beseitigung des physikalischen Widerstands und die Nutzung der Energie durch das Wasser selbst. Zwar ist diese Energie nicht so hoch, aber sie ist vorhanden. Es werden mehrere Stränge vorgesehen, die die Heizkörper im Erdgeschoss einspeisen: Stränge 13, 14, 15 werden aus der Vorlaufverteilung 11 nach unten ins Erdgeschoss geführt. Über die Stränge 13, 14, 15 werden kalte Strömungen von der ersten und zweiten Etage in den Heizkessel abgeleitet. Auf diese Weise wird der physikalische Widerstand beseitigt und der Umlauf erhöht.
   f) Der Heizkörper 5 wird angeschlossen. Befindet sich der Heizkörper abseits der Vorlaufverteilung 11 in der ersten und/oder zweiten Etage, so werden das Vorlaufrohr 17 und das Rücklaufrohr 18 über Kugelhähne vorteilhaft von oben in die Vorlaufverteilung 11 in einem Abstand von 5-10cm zueinander eingebunden, siehe Fig. 1A, Fig. 1B und Fig. 9.
      Die Besonderheit dieser Erfindung ist wie folgt: Das Vorlaufrohr 17 und das Rücklaufrohr 18 werden strikt von oben an die Vorlaufverteilung 11 angeschlossen. Die Ursache ist: Zuoberst in der Verteilung fließt das heißeste Wasser mit der höchsten Geschwindigkeit. Erfolgt der Anschluss seitlich, wie es normalerweise aus Designgründen gemacht wird, um das Rohr zu verbergen usw., so wird der Heizkörper nicht funktionieren, oder wenn schon, dann wird er lauwarm sein, weil an eine andere Geschwindigkeitsströmung angeschlossen wird: Es sei bemerkt, es geht um die Nutzung von "mehrschichtigen Wasserströmungen", wobei das heißeste Wasser mit der höchsten Geschwindigkeit zuoberst fließt.
   g) Die erste Etage: Die Vorlaufverteilung 11 kann ideal eben gestaltet sein, teilweise mit Richtungswechsel zum Heizkörper hin, um eine Entlüftung zu ermöglichen.
   h) Am Heizkessel, d.h. am Vorlaufstrang 28, kann ein Modul 25 (UNK-1-40, UNK-1-50) angebaut werden. Dieses kann den Zwangsumlauf sowie den netzunabhängigen Betrieb automatisch sicherstellen, wenn ein Stromausfall auftritt, Fig. 1A, Fig. 1B.

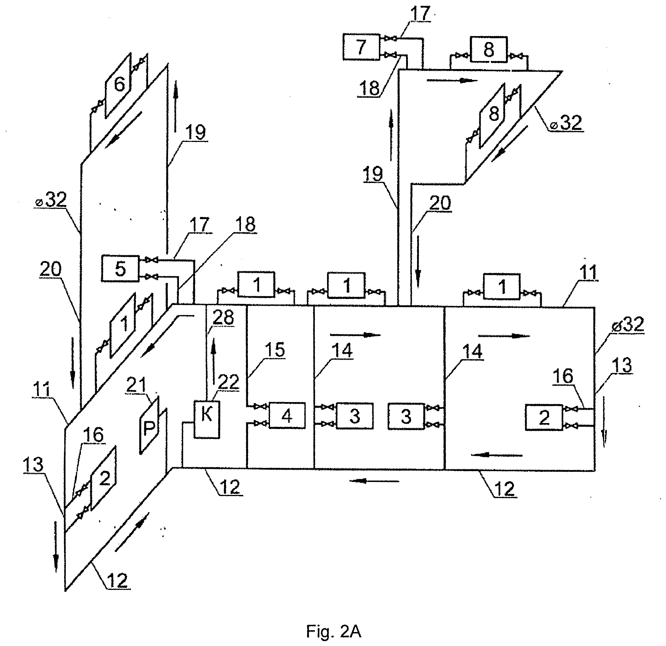

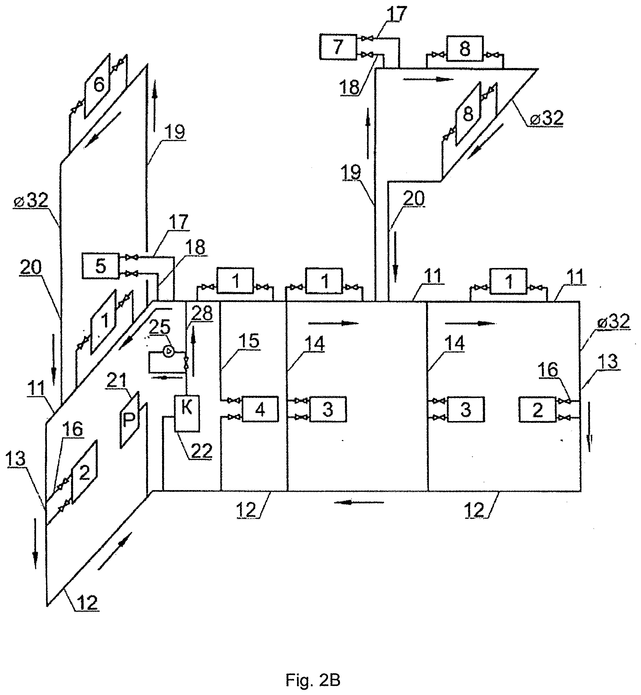

Die zweite Etage
1. Die Besonderheit der Erfindung bei der Anbindung der zweiten Etage besteht im Folgenden: Wie bereits erwähnt, befindet sich die Vorlaufverteilung 11 unter dem Fußboden oder oberhalb des Fußbodens der ersten Etage. Es wird nun eine eigene separate Verteilung montiert und in die 2. Etage gebracht. Der Durchmesser ist derselbe: 32. Keine Trennstellen sind vorgesehen. (Zwar wird diese Verteilung höher liegen, aber sie ist keine Vorlaufverteilung, denn die Heizung ist ein ganzheitlicher Organismus. Er besteht aus zahlreichen Modulen. Die Funktion der Vorlaufverteilung ist, die gesamte Energie zwischen allen Modulen zu verteilen. Danach werden die Rohre verlegt: Der Vorlauf 19 und der Rücklauf 20 werden unter dem Fußboden oder oberhalb des Fußbodens der zweiten Etage, d.h. unter den Heizkörpern in der zweiten Etage, verlegt. Danach werden sie wieder an dieselbe Vorlaufverteilung 11 angeschlossen, und zwar an einer bequemen Stelle. Danach wird der Heizkörper 6 angeschlossen, wie es für den Anschluss von Heizkörpern 1 beschrieben ist, d.h. von oben in die Verteilung hinein, Fig. 2A, Fig. 2B.
2. Zwar sind die Häuser meistens unterschiedlich, aber die zweite. Etage hat öfter eine kleinere Fläche, als die erste. Etage. Das liegt z.B. an der gebrochenen Dachlinie. Es ist somit nicht immer möglich, eine eigene, getrennte Verteilung in der zweiten Etage zu verlegen, wie es für die erste. Ausgestaltung beschrieben ist.
   Daher wird eine sehr interessante Alternativmöglichkeit vorgeschlagen: Das Rohr 19 wird in die Vorlaufverteilung 11 eingebunden. Die eigene, separate Verteilung mit demselben Durchmesser 32 wird in die zweite Etage ohne Trennstellen geführt, unter dem Fußboden oder oberhalb des Fußbodens der zweiten Etage verlegt und ganz in der Nähe mittels eines Rohrs 20 in dieselbe Vorlaufverteilung 11 eingebunden, die in der ersten Etage untergebracht ist. Je nach dem Gebäudeplan kann der minimale Abstand dabei 5 bis 10 cm oder mehr betragen. Der erwähnte, minimale Abstand bezieht sich auf die Strecke Vorlaufrohr 19 zum Rücklaufrohr 20. Der Heizkörper 7 wird angeschlossen, wie es für den Anschluss von Heizkörper 5 beschrieben ist: Fig. 1A, Fig. 1B, Fig. 9. Heizkörper 8 werden auf die gleiche Weise angeschlossen, wie es für den Anschluss von Heizkörpern 1 beschrieben ist: Fig. 1A, Fig. 1B, Fig. 7.
   Es können eins bis vier solcher separaten, unabhängiger Verteilungen in der zweiten Etage vorgesehen sein.
   Bei der Führung der Rohre 19, 20 in die zweite Etage ist es wichtig, ein kleines Gefälle zum Heizkörper oder Heizkörpern an beiden Seiten vorzusehen, um die Entlüftung sicherzustellen. Darüber hinaus werden die Heizkörper der ersten und zweiten Etage mit Entlüftungsventilen versehen.
   Der Heizkessel, d.h. der Vorlaufstrang 28, kann mit dem Modul 25 (UNK-1-40, UNK-1-50) ergänzt werden. Dieses kann sowohl den Zwangsumlauf als auch den netzunabhängigen Betrieb in Automatik-Modus sicherstellen, Fig. 2A, Fig. 2B.

### Kellergeschoss oder Untergeschoss

Da alle Häuser sich bauseits unterscheiden, werden hier drei Anschlussmöglichkeiten für das Untergeschoß vorgeschlagen:

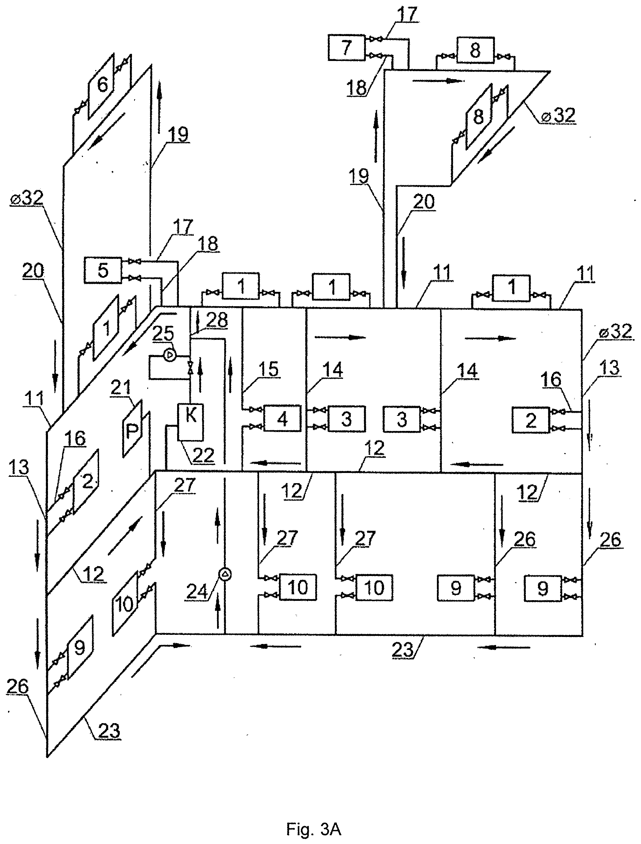

Fig. 3A: Die Stränge 26, 27 werden von der Rücklaufverteilung 12 in den Keller oder ins Untergeschoß geführt. Der Durchmesser ist mit dem für die Stränge 14, 15 identisch. Die Abschluss-Stränge 26, die vom Heizkessel entfernt sind, werden in die Schleife zusammengeschlossen: Die Rücklaufverteilung 12 wird mit der Kellerverteilung 23 mittels eines Strangs 26 ohne Trennstellen zusammengeschlossen. Die Heizkörper 9 werden in den untrennbaren Strang eingebunden. Der Anschluss erfolgt ähnlich wie bei den Heizkörpern 2, 3. Die zum Kessel am nächsten liegenden Stränge 27 werden mit Heizkörpern 10 verbunden, ähnlich wie es für den Anschluss von Heizkörpern 4 beschrieben ist, wobei im Strang eine Trennstelle angeordnet wird. Alle Heizkörper im Keller werden an die Kellerverteilung 23 angeschlossen. Die Berechnungen werden nach dem gleichen Prinzip wie beim Erdgeschoss angestellt: Je näher der Heizkörper zum Kessel liegt. desto höher muss der physikalische Widerstand erzeugt werden, damit die End-Heizkörper heißer sind. Danach wird die Umwälzpumpe 24 in die Kellerverteilung 23 eingebunden, um die verbrauchte Wasserströmung aus den Heizkörpern 9, 10 und der Kellerverteilung 23 in den Heizkessel abzuleiten. Dafür wird die Umwälzpumpe 24 in die Vorlaufverteilung 28 im Erdgeschoss oberhalb des Moduls 25 UNK-1-40, UNK-1-50 eingebunden.
a) Bei der eingeschalteten Umwälzpumpe 24, Fig. 3A, ist das Modul 25 ebenfalls aktiv: Die gebrauchte Flüssigkeit fließt von der Kellerverteilung 23 in den Vorlaufstrang 28 und dann in die Vorlaufverteilung 11, über Stränge 13, 14, 15 in die Rücklaufverteilung 12 und tritt endlich in den Heizkessel 22 ein.
b) Wird die Stromversorgung unterbrochen, so laufen weder Pumpe 24 noch die Pumpe im Modul 25. Aber die Heizung im Gebäude funktioniert weiter: Das Modul 25 schaltet automatisch auf den netzunabhängigen Betrieb um und setzt seine Funktion fort. Das passiert dank dem physikalischen Wasservorgang. Das ganze Gebäude wird weiterhin beheizt. Eventuell wird der Keller nur wenig beheizt (die Funktion der Heizung ist in dieser Druckschrift beschrieben, siehe "Netzunabhängiger Betrieb"), vorausgesetzt, dass ein netzunabhängiger Heizkessel montiert ist.
c) Alternativ kann man die Umwälzpumpe 24 im Keller manuell abschalten und die Pumpe im Modul 25 laufen lassen. Dann wird der Umlauf im Keller funktionieren und zwar alles umgekehrt: Das Wasser fließt von der Anbindungsstelle im Vorlaufstrang 28 über die Pumpe 24 in die Kellerverteilung 23, danach über die Heizkörper 9, 10 in die Rücklaufverteilung 12 und dann in den Heizkessel 22 hinein, Fig. 3A.
d) Wenn die Umwälzpumpe 25 abgeschaltet ist, Fig. 3A, und die Umwälzpumpe im Keller 24 bleibt aktiv (ein), erfolgt der Umlauf im Gebäude dank dem physikalischen Vorgang im Wasser: Die gebrauchte Flüssigkeit fließt von der Kellerverteilung 23 über die Pumpe 24 in den Vorlaufstrang 28. Der Umlauf im Keller wird intensiver sein. Nur darf die Leistung der Pumpe 24 nicht zu hoch sein, und es muss die kleinste Geschwindigkeit eingestellt sein.

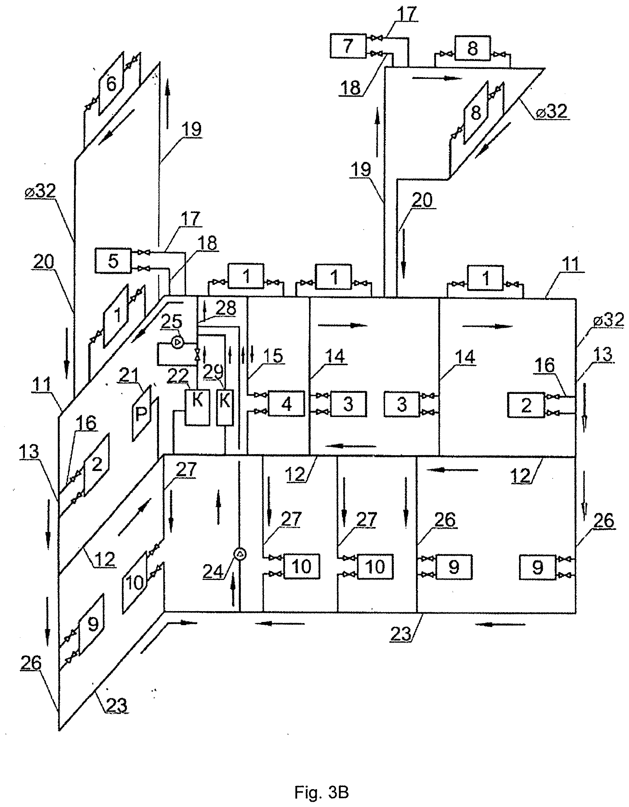

Fig. 3B: Es gilt die Beschreibung für Fig. 3A, aber neben dem Hauptheizkessel 22 wird ein elektrischer Heizkessel 29 eingesetzt: Der Rücklauf des elektrischen Heizkessels wird in die Rücklaufverteilung 12 eingebunden. Der Vorlauf wird in die Vorlaufverteilung 28 oberhalb des Moduls 25 (UNK-1-40, UNK-1-50) eingebunden. Da der elektrische Kessel nur mit Zwangsumlauf laufen kann, können elektrische Kessel mit einer integrierten Pumpe versehen werden, oder man kann ein zusätzliches, breit bekanntes Pumpenmodul montieren.

Die Vorteile einer solchen Verbindung sind folgende:
a) Wenn keiner zu Hause ist, kann das Heizsystem auf Stand-by umgestellt sein: Heizkessel 22 aus, Pumpe am Modul 25 aus, Pumpe im Keller 24 aus und Heizkessel 29 ein. Dadurch wird der minimale Energieverbrauch erreicht, aber der Keller wird zwar wenig doch genug für die Winterzeit beheizt. Wird Pumpe 24 eingeschaltet, so wird der Stromverbrauch am Heizkessel 29 hoch sein, denn das ganze Gebäude wird damit beheizt.
b) Alternativ kann tagsüber mit dem Hauptheizkessel 22 und nachts mit dem elektrischen Kessel 29 gefahren werden. Die zusätzliche Einsparung kommt dadurch, dass der Nachttarif niedriger ist.

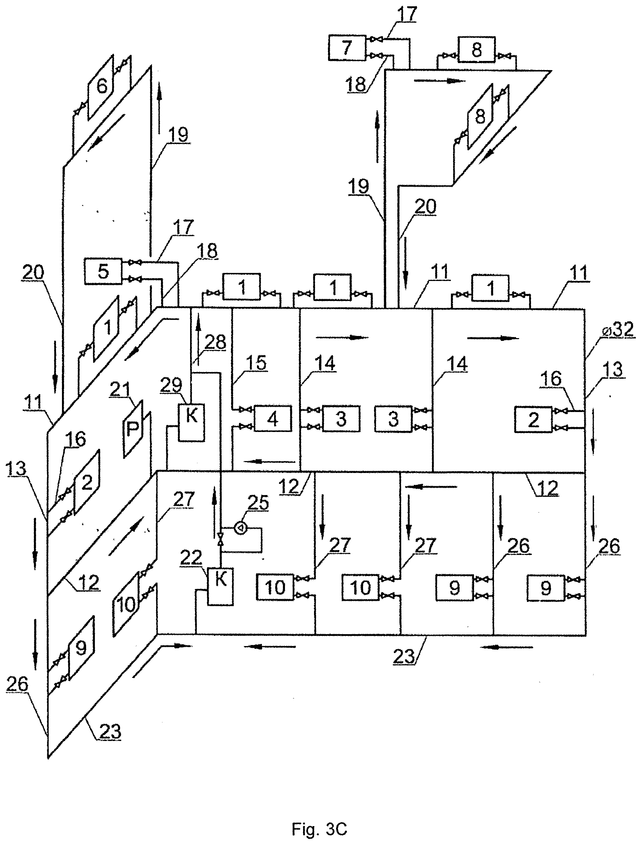

Fig. 3C: Der elektrische Heizkessel 29 bleibt an derselben Stelle, d.h. im Erdgeschoß, und der Hauptheizkessel 22 und das Modul 25 (UNK-1-40, UNK-1-50) werden in den Keller versetzt. Der Rücklauf des Heizkessels 22 wird an die Kellerverteilung 23 angeschlossen und zwar an der Stelle, an der die Umwälzpumpe 24 eingebunden war (Pumpe 24 wird aus dem Heizungsplan entfernt). Der Vorlauf des Heizkessels 22 wird an das Modul 25 (UNK-1-40, UNK-1-50) angeschlossen und dann in den Vorlaufstrang 28 oberhalb des elektrischen Heizkessels 29 eingebunden.
a) Wenn der Hauptheizkessel 22 im Keller betrieben wird, funktioniert die Heizung auf die gleiche Weise wie bei der Ausgestaltung nach Fig. 3A. Der einzige Unterschied besteht darin, dass der Heizkessel mehr belastet ist, denn er beheizt nun das ganze Gebäude mit vier Etagen im Vergleich zum Heizungsplan, bei dem der Heizkessel 22 im Erdgeschoss eingesetzt ist.
b) Wird die Spannungsversorgung unterbrochen, läuft die Heizung weiter und versorgt alle vier Etagen mit Wärme. Der Mediumumlauf erfolgt dank dem physikalischen Vorgang, vorausgesetzt, dass der netzunabhängige Heizkessel 22 installiert ist.
c) Die Beheizung kann auch gemäß der Ausgestaltung nach Fig. 3B erfolgen, indem mit dem elektrischen Heizkessel 29 nachgeheizt wird, der im Erdgeschoß aufgestellt ist: Der Hauptheizkessel 22 ist aus, das Modul 25 ist aus und der Heizkessel 29 bleibt eingeschaltet. Die Hauptaufgabe des Heizkessels 29 betrifft dann die Beheizung der drei oberer Etagen, während das Heizsystem den Keller unterstützt. Alles funktioniert umgekehrt im Vergleich dazu, wenn mit dem Hauptheizkessel 22 beheizt wird: Das Heizmedium fließt vom Strang 28 über das Modul 25 und über den Heizkessel 22 (der Heizkessel hat gute Wärmedämmung, um die Wärmeabgabe zu vermeiden) in die Kellerverteilung 23 und dann über die Heizkörper 9, 10 in die Rücklaufverteilung 12 und tritt in den Heizkessel 29 ein. Bei dieser Ausgestaltung ist der Umlauf im Keller nicht besonders intensiv, aber schnell genug, um den Keller in der Winterzeit zu beheizen und den minimalen Brennstoffverbrauch zu erzielen.
d) Soll das Haus ganz schnell beheizt werden, können beide Heizkessel 22 und 29 gleichzeitig eingeschaltet sein.

Alle drei Ausgestaltungen ergeben je zwei separate unabhängige Heizungsanlagen: getrennte Funktion für drei Etagen und getrennte Funktion für den Keller.

Die beanspruchte Heizung bietet leistungsstarke Betriebsarten und einen guten Wirkungsgrad.

In den Häusern mit zwei und drei Etagen kann auf das Modul 25 verzichtet werden. In den Häusern mit vier Etagen soll dieses Modul vorzugsweise eingesetzt werden.

Bei Spannungsunterbrechungen läuft die Heizung weiter: Dank dem Modul 25 UNK-1-40, UNK-1-50 wird alles automatisch umgeschaltet.

Die erste und die dritte Etage funktionieren völlig auf der Grundlage des physikalischen Vorgangs.

Der Umlauf ist so intensiv, dass keine Pumpen nötig sind.

Die Bauweise des Ausdehnungsbehälters spielt keine Rolle. Sie beeinflusst die Funktion der Heizung in keiner Hinsicht. Ihre Aufgabe ist es, die Flüssigkeitswärmeausdehnung auszugleichen und das System zu entlüften. Wenn ein moderner Ausdehnungsbehälter eingesetzt wird, der das Heizsystem unter Druck halten kann, so muss an der höchsten Stelle des Heizkörpers ein automatisches Entlüftungsventil eingebaut sein.

Ein weiterer Vorteil: Die Heizkörper in der zweiten Etage können die Rolle des Ausdehnungsbehälters übernehmen: Ist die Flüssigkeit völlig verbraucht, wird die obere Etage nicht funktionieren, während die Heizung für das übrige Gebäude weiter laufen wird. Es ist gut ersichtlich, dass das Heizmedium im fertig montierten System einfach nachgefüllt werden kann.

### Anschluss der Fußbodenheizung

Bauseits sind alle Häuser unterschiedlich. Es gibt mehrere Anschlussmöglichkeiten für die Fußbodenheizungen. Aber bei dieser beanspruchten, neuen Heizung dürfen die Anschlusspläne für die Fußbodenheizung nach "westlicher Technologie" nicht benutzt werden. Bei dieser Technologie ist alles einfach: Dem Heizkessel entspringt ein separater Kreis zum Fußbodenheizungs-Modul, und es macht keinen Unterschied, denn diese Heizung kann nur mit Pumpe betrieben werden; auch die Fußbodenheizung arbeitet mit der Pumpe. Die neue Heizung ist viel komplizierter. Man muss versuchen, die Fußbodenheizung gar ohne Pumpe zu gestalten. Darüber hinaus muss man danach streben, dass die Fußbodenheizung vorhanden ist und dass sie dabei die Heizung mit netzunabhängiger Betriebsart nicht stört. Man muss sich auch darum vorteilhaft bemühen, dass die laufende Fußbodenheizung den Umlauf in der gesamten Heizung unterstützt und sie erhöht. Aber wenn dabei die Spannungsversorgung untergebrochen ist, soll die Heizung weiter laufen und keiner mechanischen Handlungen bedürfen, denn um diese Zeit können die Hausbewohner abwesend sein. Es ist möglich, auch ohne Fußbodenheizung auszukommen. Da alle Häuser bauseits unterschiedlich sind, gibt es keine gleichen Häuser, aber die Häuser können ähnlich sein. Daher werden bei der neuen Heizung 15 Anschlussmöglichkeiten für Fußbodenheizung für die Häuser mit zwei, drei und vier Etagen geboten..

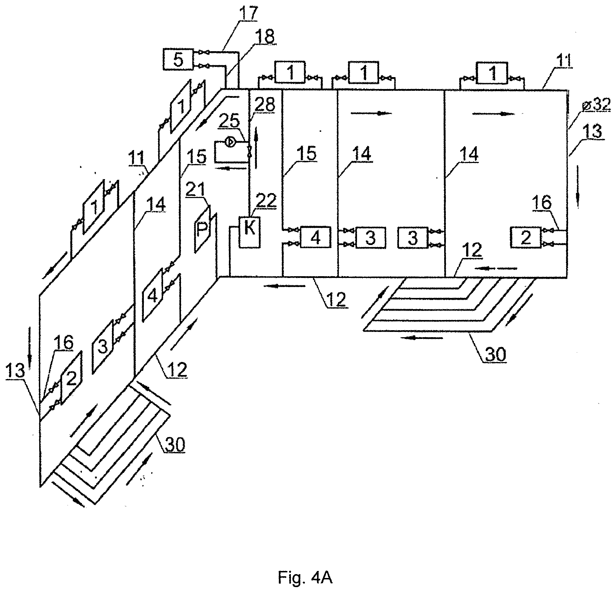

Fig. 4A:. Die Fußbodenheizung wird an das Heizsystem für zwei Etagen und zwar an die Rücklaufverteilung 12 im Erdgeschoß angeschlossen. Dabei wird der netzunabhängige Betrieb des Umlaufs der Fußbodenheizung eingesetzt. An die richtig verlegte Rücklaufverteilung 12 werden fächerartig verlegte Rohre 30 angeschlossen, die die Fußbodenheizung ausbilden. Die Rohre werden in die Rücklaufverteilung 12 fächerartig eingebunden und wiederum an dieselbe Verteilung eben und mit einem kleinen Gefälle angeschlossen, um die Entlüftung in der Richtung ab Startpunkt der Wasserbewegung zu ermöglichen. Auf diese Weise wird ein Fußbodenheizungskreis 30 gebildet.

Die Rücklaufverteilung 12 ist in der üblichen Bauweise ohne Verengungen und mit demselben Rohrdurchmesser ausgebildet. Die ebenen Kleindurchmesserrohre werden einfach gleichläufig mit der Rücklaufverteilung 12 eingebunden, wenn die Rücklaufverteilung 12 von der gewünschten Fußbodenheizung nicht zu weit entfernt ist. Die Fig. 4A zeigt das Modul 25 (UNK-1-40, UNK-1-50), das sowohl den Zwangsumlauf als auch den netzunabhängigen Betrieb im Automatik-Modus sicherstellen kann. Beim Anschluss des Moduls 25 werden die Möglichkeiten der Fußbodenheizung erweitert. Wird das Modul 25 abgeschaltet, so arbeitet die gesamte Heizung netzunabhängig. Das Modul 25 kann aus dem Schaltungsplan entfernt werden: Sowohl die Heizung als auch die Fußbodenheizung werden schön funktionieren.

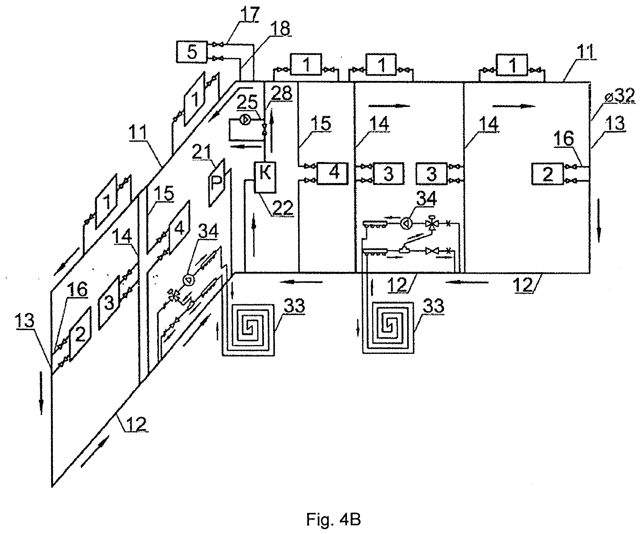

Fig. 4B: Die Fußbodenheizung wird ans Heizsystem für zwei Etagen angeschlossen.

Es wird das Fußbodenheizungs-Modul 34 montiert, das in seinem geschlossenen Kreis, d.h. mit einer Pumpe im Erdgeschoss, zwangsläufig arbeitet. Die Einspeisung des Vorlaufs und des Rücklaufs des Fußbodenheizungsmoduls erfolgt von der Rücklaufverteilung 12: Das Fußbodenheizungs-Modul 34 wird in ein Rohr ohne Trennstellen an einer bequemen Stelle in die Rücklaufverteilung 12 eingebunden, die horizontal im Erdgeschoss angeordnet ist. Der Vorlauf wird in einem Abstand von 10-20cm zum Rücklauf eingebunden (es wurde bereits erwähnt: der möglichst minimale Abstand). Bei einer solchen Anbindung werden unbedingt zwei Fußbodenheizungsmodule 34 zwecks Ausbalancierens angeschlossen. Sehr wichtig: Da die Fußbodenheizung mit Pumpe betrieben wird, tritt die das Modul 34 verlassende Wasserströmung in die Rücklaufverteilung 12 ein und reißt den Wasserinhalt aus der Heizung mit sich fort. Somit verstärkt sie den Umlauf in der gesamten Heizung. Dafür muss die Wasserströmung aus dem Modul 34 der Fußbodenheizung gerichtet geliefert werden. Das heißt, der Rücklauf des Moduls 34 muss in die Rücklaufverteilungen 12 im Winkel von 45° eingebunden werden. Wird im Winkel von 90° eingebunden, so wird es zu Verwirbelungen kommen, d.h. zu einer Bremsmomentwirkung. Wenn die Montage unter Verwendung von Polypropylen-Rohren durchgeführt wird, besteht das Problem darin, dass keine 45°- T-Stücke im Handel erhältlich sind. Zu Unrecht: Während der Flüssigkeitsbewegung in den Rohrleitungen nehmen der dynamische und der hydraulische Widerstand ab. Hierfür wird folgende Lösung vorgeschlagen: Man nehme einen Polypropylen-Filter, entnehme alle inneren Bauteile, und so hat man das T-Stück.

Das Modul 25 kann aus dem Heizungsplan ganz entfernt oder einfach ausgeschaltet werden, während die Pumpe am Fußbodenheizungs-Modul 34 eingeschaltet bleibt: Die Heizung wird perfekt funktionieren, und die mit der Pumpe laufende Fußbodenheizung wird in ihrem geschlossenen Kreis den Umlauf für die gesamte Heizung unterstützen. Beim Stromausfall wird die Heizung weiter funktionieren und die Fußbodenheizung nicht mehr.

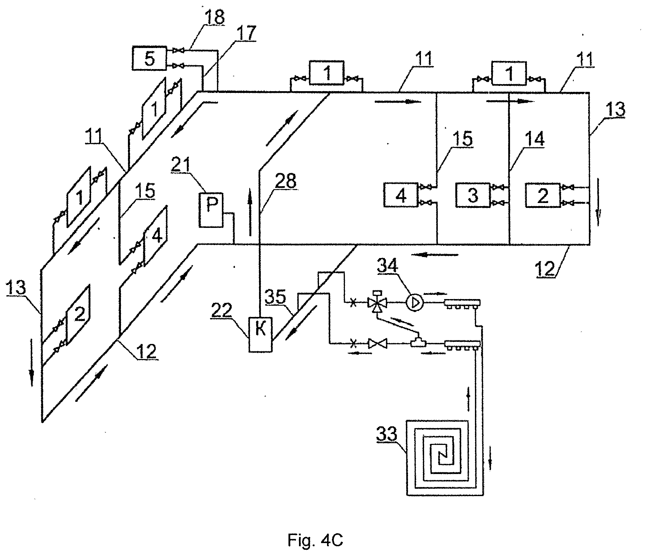

Fig. 4C: Bei dieser Ausgestaltung wird ein Fußbodenheizungs-Modul 34 angeschlossen. Die Anbindung des Fußbodenheizungsmoduls 34 erfolgt gemäß der Beschreibung für Fig. 4B. Der Unterschied besteht nur darin, dass bei dieser Ausgestaltung nur ein Fußbodenheizungsmodul angeschlossen werden darf, denn der Anschluss ist nicht immer bequem. Manchmal gibt es ja auch keine Möglichkeit oder es liegt kein Bedarf vor, zwei Fußbodenheizungsmodule 34 anzuschließen. Das Heizsystem hat immer mindestens zwei "Rücklaufverteilungen". Diese werden nachfolgend in einem Rohr vereinigt, das hier als "Rücklauf-Sammelverteilung" bezeichnet wird und mit dem Heizkessel verbunden wird. Das Fußbodenheizungs-Modul 34 wird in die "Rücklauf-Sammelverteilung" 35 eingebunden, genauso wie es vorher für den Anschluss des Fußbodenheizungsmoduls 34 in Fig. 4B beschrieben ist.

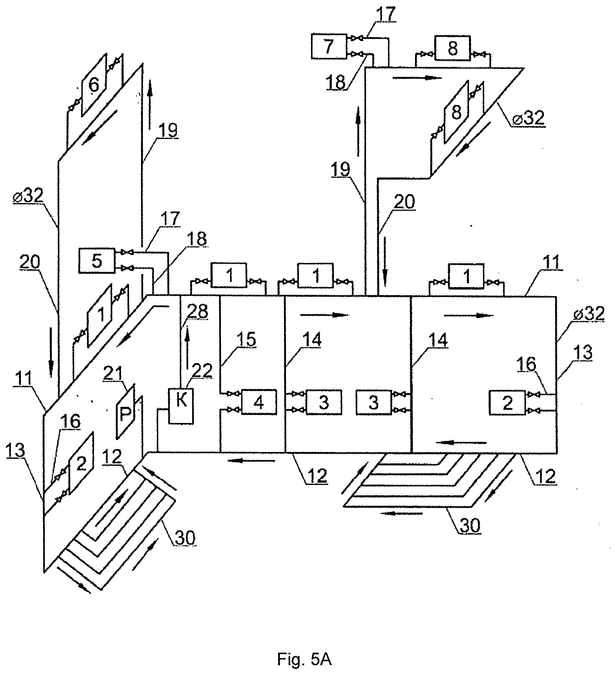

Fig. 5A:. stellt die Anbindung der Fußbodenheizung an das Heizsystem für drei Etagen, und zwar an die Rücklaufverteilung 12 im Erdgeschoss, unter Verwendung des netzunabhängigen Umlaufbetriebs des Fußbodenheizungkreises 30 dar. Bei dieser Ausgestaltung ist der Anschluss der Fußbodenheizung ähnlich wie in der Ausgestaltung nach Fig. 4A. Der Unterschied besteht nur darin, dass eine weitere Etage dazukommt. Der Heizungsplan kann durch Modul 25 ergänzt werden.

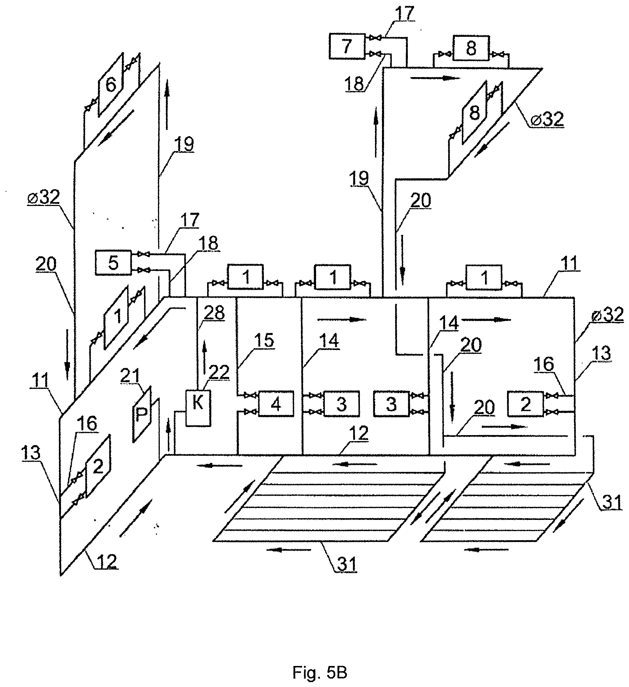

Fig. 5B: Die Anbindung der Fußbodenheizung ans Heizsystem für drei Etagen wird dargestellt. Der Anschluss wird mit Hilfe von Verteilern der Fußbodenheizung 31 im Erdgeschoss ausgeführt. Um den Gefälledruck auf die Fußbodenheizung zu steigern, wird das gebrauchte Wasser von der zweiten Etage ausgenutzt: In das Rücklaufrohr 20 von der zweiten Etage wird nicht wie vorher dieselbe Vorlaufverteilung 11 eingebunden, sondern. das Rücklaufrohr 20 wird nach unten geführt und an die Verteiler 31 angeschlossen. Danach werden die Verteiler an die Rücklaufverteilung 12 im Erdgeschoss eingebunden. Der Verteiler 31 wird in Form eines ebenen Rohrs mit einem relativ kleinen Durchmesser ausgebildet, das in Richtung des Startpunkts der Wasserbewegung, d.h. zur Einbindungsstelle des von der zweiten Etage nach unten geführten Rohrs 20 eingebracht wird, um den Verteiler zu entlüften.

Ein solcher Anschluss der Fußbodenheizung kann im netzunabhängigen Betrieb verwendet werden, vorausgesetzt, dass das Modul 25 aus dem Heizungsplan weggenommen ist oder dass das Modul 25 zwar montiert, aber ausgeschaltet ist.

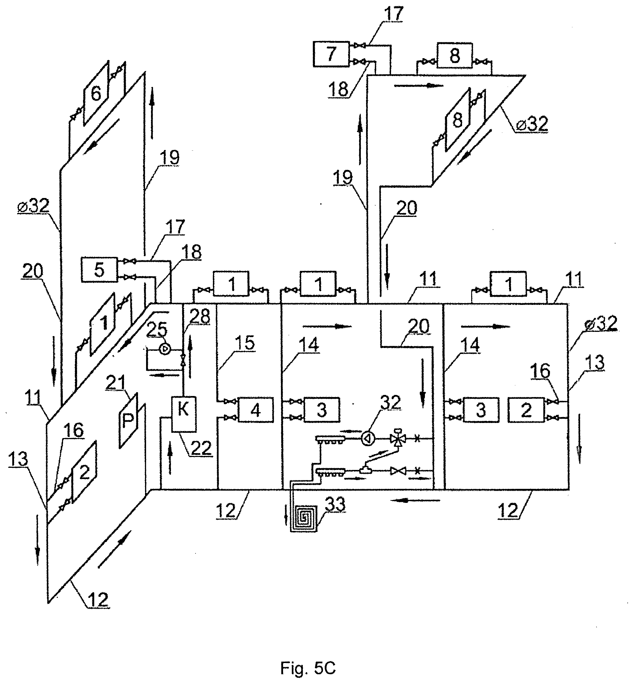

Fig. 5C: Die Anbindung der Fußbodenheizung ans Heizsystem für drei Etagen ist dargestellt. Das Fußbodenheizungs-Modul 32 arbeitet zwangsläufig in seinem geschlossenen Kreis, d.h. es wird mit Pumpe betrieben. Das Modul wird im Erdge-schoss installiert: Die Einspeisung erfolgt vom Rücklaufstrang 20, der von der zweiten Etage nach unten geführt ist. Um den Gefälledruck auf die Fußbodenheizung zu steigern, wird das gebrauchte Wasser von der zweiten Etage ausgenutzt: Der Rücklaufstrang 20 wird in Form eines geraden, ungeteilten Rohrs von der zweiten Etage nach unten geführt und in die Rücklaufverteilung 12 im Erdgeschoss eingebunden. Hierher wird das Fußbodenheizungs-Modul 32 ohne Trennstellen eingebunden. Der Vorlauf und der Rücklauf des Moduls 32 werden in den Rücklaufstrang 20, der von der zweiten Etage nach unten läuft, im Erdgeschoss eingebunden. Das Modul 32 sorgt für die Flüssigkeitszirkulation in seinem geschlossenen Kreis mit Zwangsumlauf über den Fußbodenheizungskreis 33.

Das Modul 25 kann angeschlossen oder aus dem Heizungsplan entfernt werden. Das Heizsystem kann netzunabhängig arbeiten. Die Fußbodenheizung funktioniert in ihrem geschlossenen Kreis. Beim Stromausfall wird die Heizung weiter funktionieren und die Fußbodenheizung nicht.

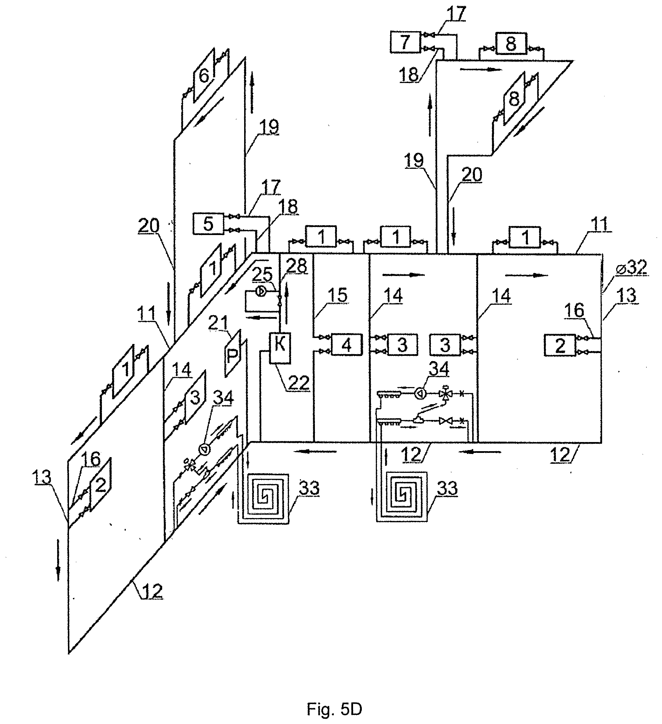

Fig. 5D: Die Anbindung der Fußbodenheizung ans Heizsystem für drei Etagen ist dargestellt. Das Fußbodenheizungs-Modul 34 wird im Erdgeschoss aufgebaut und von der Rücklaufverteilung 12 eingespeist. Der Vorlauf und der Rücklauf der Fußbodenheizung werden in ein Rohr, und zwar in die Rücklaufverteilung 12, eingebunden, die horizontal im Erdgeschoss angeordnet ist. Bei dieser Ausgestaltung ist der Anschluss der Fußbodenheizung ähnlich wie bei der Ausgestaltung nach Fig. 4B ausgebildet. Alles ist genauso gestaltet, das Fußbodenheizungs-Modul 34 ist an die Rücklaufverteilung 12 im Erdgeschoß angeschlossen, nur die zweite Etage kommt dazu.

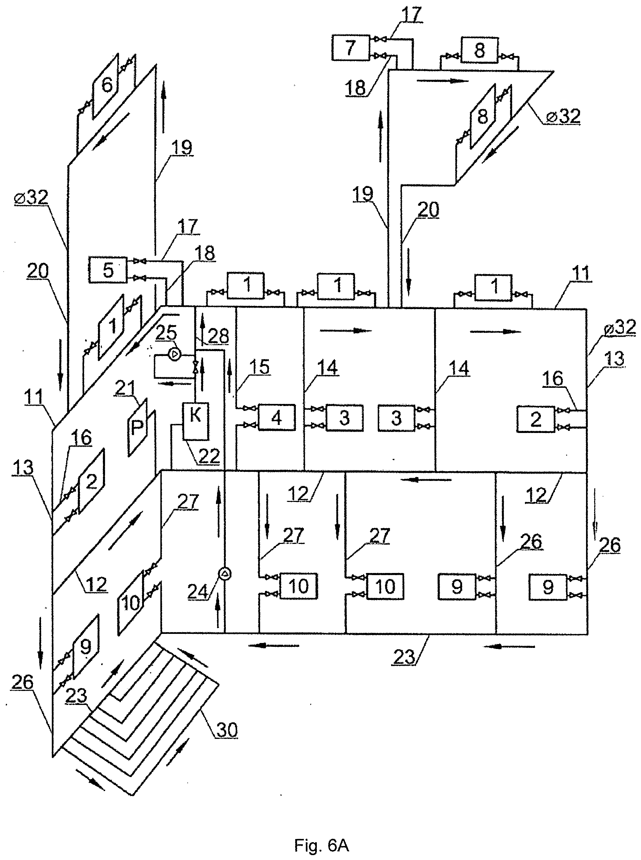

Fig. 6A.: Die Anbindung der Fußbodenheizung ans Heizsystem für vier Etagen. Ist dargestellt. Die Anbindung erfolgt in die Kellerverteilung 23 im Keller. Dabei wird der netzunabhängige Umlaufbetrieb der Fußbodenheizung dank der richtigen Verlegung der Kellerverteilung 23 verwendet. Die Rohre 30, die die Fußbodenheizung ausbilden, werden fächerartig verlegt und an die Kellerverteilung 23 angeschlossen. Bei dieser Ausgestaltung erfolgt der Anschluss der Fußbodenheizung ähnlich wie bei der Ausgestaltung nach Fig. 4A und Fig. 5A, ausgenommen, dass der Fußbodenheizungskreis 30 an die Kellerverteilung 23, also im Keller, angeschlossen ist, und dass noch eine Etage dazukommt. Der Fußbodenheizungskreis 30 kann im Keller und/oder im Erdgeschoss angeschlossen sein.

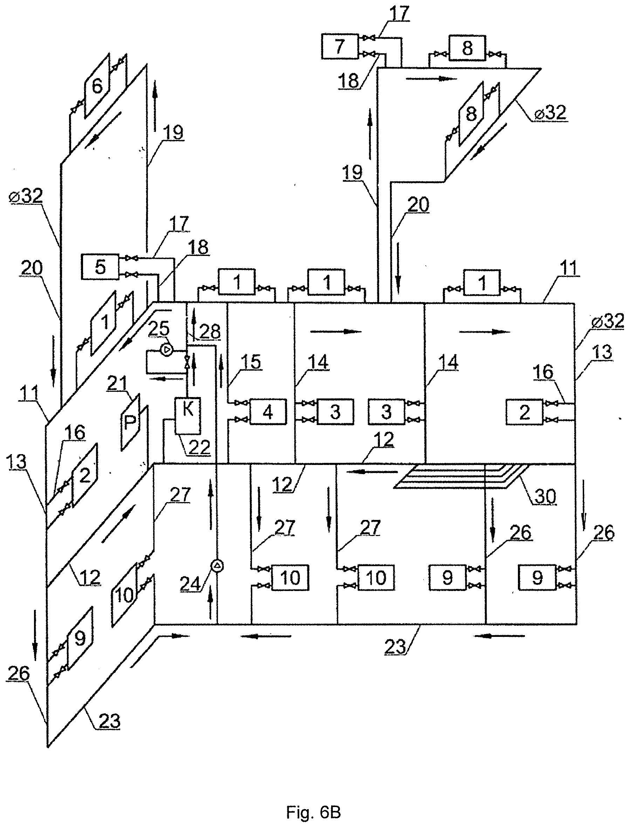

Fig. 6B: Die Anbindung der Fußbodenheizung ans Heizsystem für vier Etagen ist dargestellt. Die Anbindung erfolgt in die Rücklaufverteilung 12 im Erdgeschoss. Dabei wird der netzunabhängige Umlaufbetrieb der Fußbodenheizung dank der richtigen Verlegung der Rücklaufverteilung 12 verwendet. Die Rohre 30, die die Fußbodenheizung ausbilden, werden fächerartig verlegt und an die Rücklaufverteilung 12 angeschlossen. Bei dieser Ausgestaltung erfolgt der Anschluss der Fußbodenheizung ähnlich wie bei der Ausgestaltung nach Fig. 4A, Fig. 5A, und Fig. 6A, ausgenommen, dass der Fußbodenheizungskreis 30 an die Rücklaufverteilung 12 im Erdgeschoss angeschlossen ist und dass noch eine Etage dazukommt. Der Fußbodenheizungskreis 30 kann im Keller und/oder im Erdgeschoss angeschlossen sein.

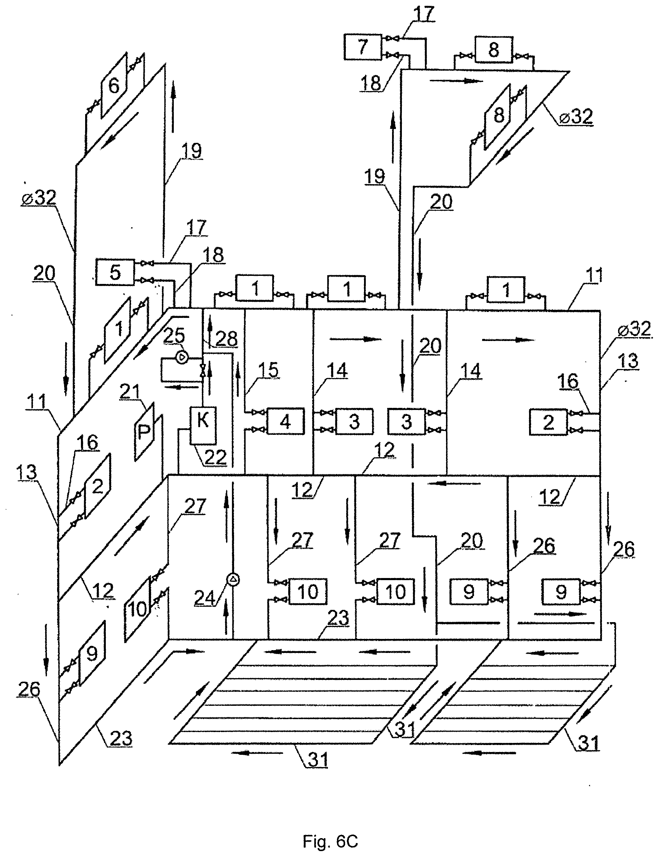

Fig. 6C: Die Anbindung der Fußbodenheizung ans Heizsystem für vier Etagen ist dargestellt. Die Anbindung erfolgt in die Verteiler der Fußbodenheizung 31 im Keller. Um den Gefälledruck auf die Fußbodenheizung zu steigern, wird das gebrauchte Wasser von der zweiten Etage ausgenutzt: Das Rücklaufrohr von der zweiten Etage 20 wird nicht wie vorher in dieselbe Vorlaufverteilung 11 eingebunden, sondern der Rücklauf 20 wird von der zweiten Etage nach unten geführt und an den Verteiler 31 angeschlossen, der sich im Keller befindet. Danach wird der Verteiler in die Kellerverteilung 23 eingebunden. Der Verteiler 31 wird in Form eines ebenen Rohrs mit einem relativ kleinen Durchmesser ausgebildet, das in Richtung des Startpunkts der Wasserbewegung, d.h. zur Einbindungsstelle des von der zweiten Etage nach unten geführten Rohrs 20, führt, um den Verteiler zu entlüften. Bei dieser Ausgestaltung erfolgt der Anschluss der Fußbodenheizung ähnlich wie bei der Ausgestaltung nach Fig. 5B, ausgenommen, dass der Verteiler der Fußbodenheizung 31 im Keller angeschlossen ist. Der Verteiler der Fußbodenheizung 31 kann im Keller und/oder im Erdgeschoss angeschlossen sein. Bei dieser Anschlussmöglichkeit kann die Fußbodenheizung netzunabhängig betrieben werden.

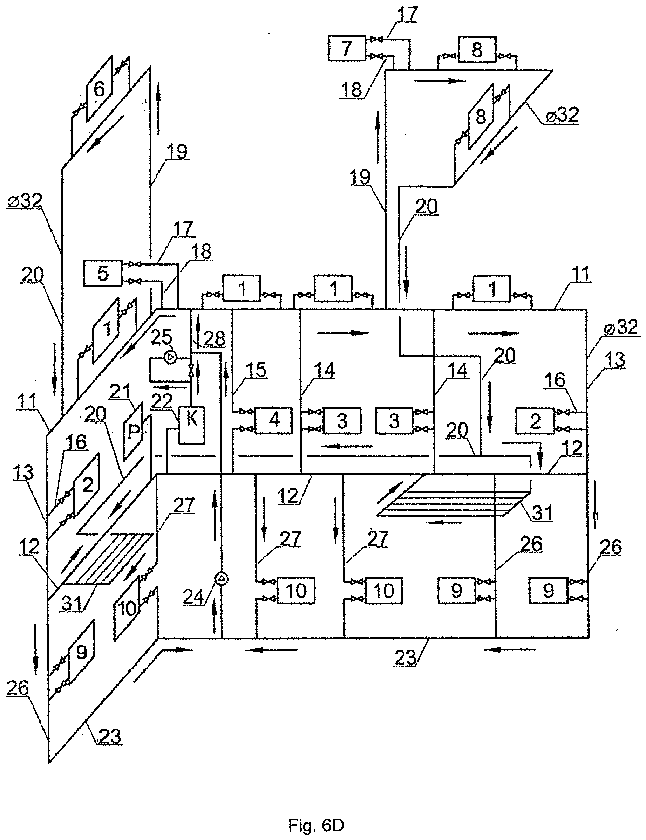

Fig. 6D: Die Anbindung der Fußbodenheizung ans Heizsystem für vier Etagen. Ist dargestellt. Die Fußbodenheizung wird an die Verteiler der Fußbodenheizung 31 im Erdgeschoss angeschlossen. Bei dieser Ausgestaltung erfolgt der Anschluss der Fußbodenheizung ähnlich wie bei der Ausgestaltung nach Fig. 5B und Fig. 6C. Alles ist ebenso, ausgenommen, dass die Verteiler der Fußbodenheizung 31 im Erdgeschoss angeschlossen sind. Die Verteiler der Fußbodenheizung 31 können im Keller und/oder im Erdgeschoss angeschlossen sein. Bei dieser Anschlussart kann die Fußbodenheizung netzunabhängig betrieben werden.

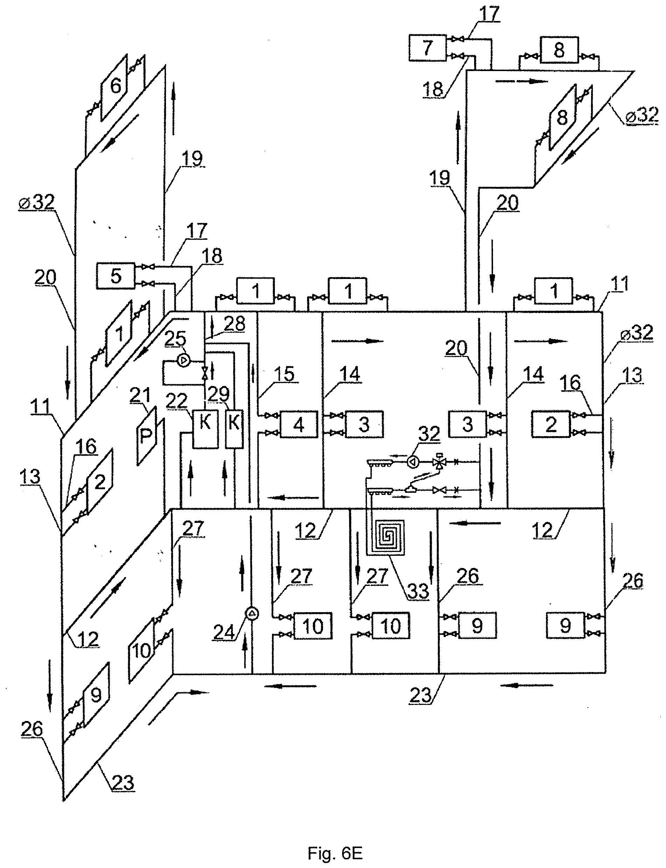

Fig. 6E: Die Anbindung der Fußbodenheizung ans Heizsystem für vier Etagen ist dargestellt. Der von der zweiten Etage nach unten geführte Rücklaufstrang 20 wird in die Rücklaufverteilung 12 im Erdgeschoss eingebunden. Das Fußbodenheizungs-Modul 32 wird in die Rücklaufverteilung 12 ohne Trennung eingebunden. Bei dieser Ausgestaltung erfolgt der Anschluss der Fußbodenheizung ähnlich wie bei der Ausgestaltung nach Fig. 5C. Alles ist ebenso. Das Fußbodenheizungs-Modul 32 ist in den von der zweiten Etage herabgehenden Rücklaufstrang 20 im Erdgeschoss eingebunden, nur kommt das Kellergeschoss dazu. Das Fußbodenheizungs-Modul 32 kann im Keller und/oder im Erdgeschoss angeschlossen sein. Der Fußbodenheizungskreis 33 kann in einer beliebigen Etage verlegt sein.

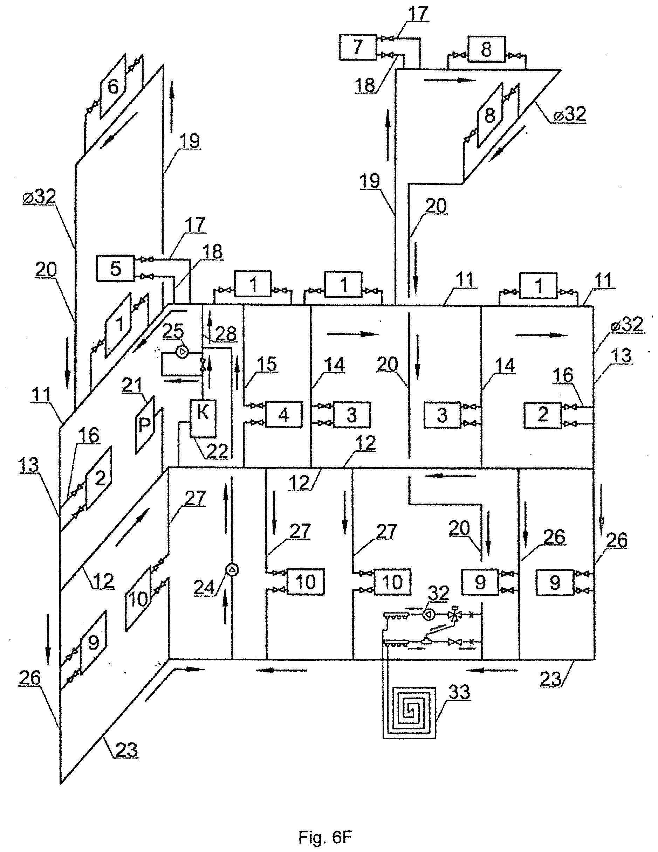

Fig. 6F: Die Anbindung der Fußbodenheizung ans Heizsystem für vier Etagen: ist dargestellt. Der von der zweiten Etage nach unten geführte Rücklaufstrang 20 wird in die Kellerverteilung 23 eingebunden. Das Fußbodenheizungs-Modul 32 wird in die Kellerverteilung 23 ohne Trennung eingebunden. Bei dieser Ausgestaltung erfolgt der Anschluss der Fußbodenheizung ähnlich wie bei der Ausgestaltung nach Fig. 5C und Fig. 6E. Alles ist ebenso, ausgenommen, dass das Fußbodenheizungs-Modul 32 an den von der zweiten Etage nach unten geführten Rücklaufstrang 20 im Keller angeschlossen und in die Kellerverteilung 23 eingebunden ist und dass das Kellergeschoss dazukommt. Das Fußbodenheizungs-Modul 32 kann im Keller und/oder im Erdgeschoss angeschlossen sein. Der Fußbodenheizungskreis 33 kann in einer beliebigen Etage verlegt sein.

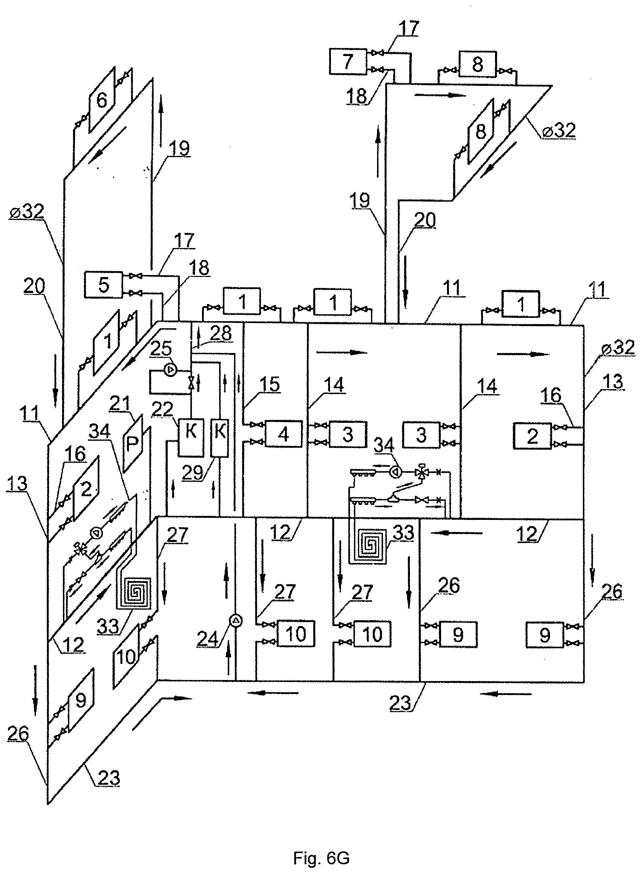

Fig. 6G.: Die Anbindung der Fußbodenheizung ans Heizsystem für vier Etagen ist dargestellt. Das Fußbodenheizungs-Modul 34 im Erdgeschoss wird von der Rücklaufverteilung 12 im Erdgeschoss eingespeist. Der Vorlauf und der Rücklauf der Fußbodenheizung werden in ein Rohr, und zwar in die Rücklaufverteilung 12, eingebunden, die horizontal im Erdgeschoss untergebracht ist. Bei dieser Ausgestaltung erfolgt der Anschluss der Fußbodenheizung ähnlich wie bei der Ausgestaltung nach Fig. 4B und Fig. 5D. Alles ist gleich, das Fußbodenheizungs-Modul 34 ist ebenso an die Rücklaufverteilung 12 im Erdgeschoss angeschlossen. Es kommt noch die zweite Etage und das Kellergeschoss dazu. Das Fußbodenheizungs-Modul 34 kann im Keller und/oder im Erdgeschoss angeschlossen sein. Der Fußbodenheizungskreis 33 kann in einer beliebigen Etage verlegt sein.

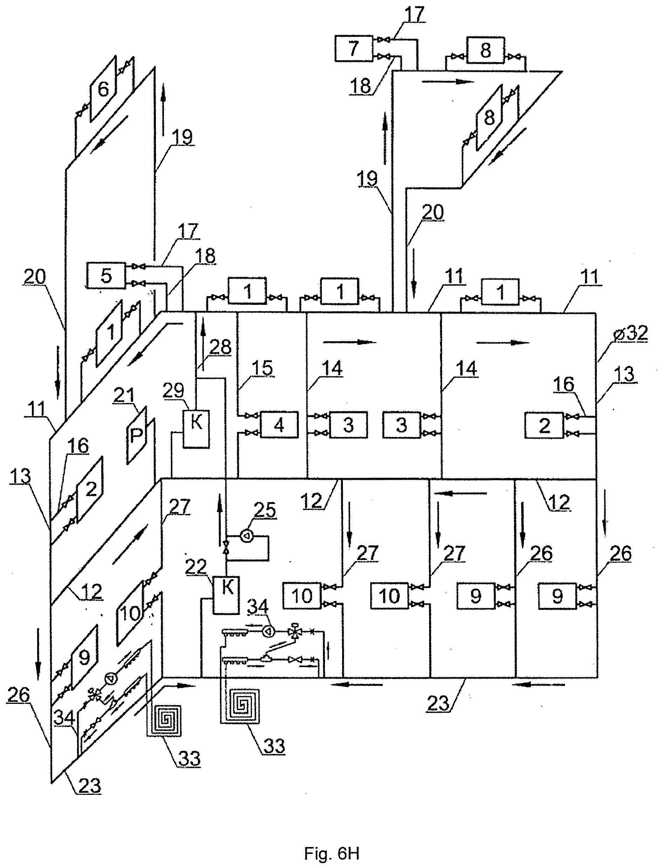

Fig. 6H: Die Anbindung der Fußbodenheizung ans Heizsystem für vier Etagen ist dargestellt. Das Fußbodenheizungs-Modul 34 im Keller wird von der Kellerverteilung 23 eingespeist. Der Vorlauf und der Rücklauf der Fußbodenheizung werden in ein Rohr, und zwar in die Kellerverteilung 23, eingebunden, die horizontal im Keller angeordnet ist. Bei dieser Ausgestaltung erfolgt der Anschluss der Fußbodenheizung ähnlich wie bei der Ausgestaltung nach Fig. 4B, Fig. 5D, Fig. 6G. Alles ist ebenso, ausgenommen, dass das Fußbodenheizungs-Modul 34 nicht im Erdgeschoß sondern im Keller angeschlossen und in die Kellerverteilung 23 eingebunden ist und dass die zweite Etage und das Kellergeschoss dazukommen. Das Fußbodenheizungs-Modul 34 kann im Keller und/oder im Erdgeschoss angeschlossen sein. Der Fußbodenheizungskreis 33 kann in einer beliebigen Etage verlegt sein.

## Patentansprüche

1. Heizsystem in Zwei-, Drei- bzw. Vier-Etagen-Ausführung für ein Haus mit einem Keller, einem Erdgeschoss, einer ersten Etage, einer zweiten Etage und einem Fußboden in den Etagen, mit einer Anschlussmöglichkeit für Fußbodenheizung, mit einer netzunabhängigen Betriebsart, unter Nutzung von mehrschichtigen Wasserströmungen zur Ausführung des Umlaufs, mit einem Heizkessel (22), der im Erdgeschoss und/oder im Keller aufgestellt ist, oder mit zwei Heizkesseln (22, 29), die in einer Etage aufgestellt sind, das folgende Merkmale aufweist:
- der Heizkessel (22) ist mittels eines Vorlaufstrangs (28) mit einer Vorlaufverteilung (11) verbunden,
- es ist ein Pumpen-Ventilstandmodul (25) in den Vorlaufstrang (28) eingebunden, welches einen Zwangsumlauf in dem Heizsystem sowie den netzunabhängigen Betrieb automatisch sicherstellt
- die Vorlaufverteilung (11) ist oberhalb des Fußbodens anordenbar oder im Fußboden der ersten Etage verdeckbar,
- die Vorlaufverteilung (11) ist mittels eines Randstrangs (13), und einer Rücklaufverteilung (12) zu einer Schleife verbunden,
- es sind mindestens zwei solche Schleifen mit eigenen Verteilungen vorgesehen,
**dadurch gekennzeichnet,**
**dass** die Rohrdurchmesser in den Verteilungen im Vergleich zum Vorlaufstrang (28) reduziert sind,
**dass** ein Ausdehnungsbehälter (21) vorgesehen ist,
**dass** eine Umwälzpumpe im Keller (24), Stränge und Heizgeräte, nämlich Heizkessel, Heizkörper (1 bis 10) und/oder Fußbodenheizung vorgesehen sind,
**dass** ein Heizkörper (2) im Erdgeschoss über Kugelhähne in den Randstrang (13) ohne Trennung des Strangs (13) eingebunden ist, und die innenliegenden Heizkörper (3, 4) über Kugelhähne an innenliegende Stränge (14, 15) ohne Trennung des Strangs (14, 15) angeschlossen sind,
**dass** die Stränge (14, 15) die Vorlaufverteilung (11) und die Rücklaufverteilung (12) in eine Schleife miteinander verbinden,
**dass** die weiteren innenliegenden Heizkörper (3, 4) parallel zum Heizkessel (22) angeordnet sind,
**dass** die weiteren innenliegenden Heizkörper (3, 4) über Kugelhähne an den innenliegenden Strang (14, 15) angeschlossen sind,
**dass** die Durchmesser der innenliegenden Stränge (14, 15) kleiner im Vergleich zum Randstrang (13) dimensioniert sind,
**dass** im Betrieb des Heizsystems zwei Hauptströmungen in den Verteilungen und generell in den Rohrleitungen vorgesehen sind, und zwar die Heißschicht und die kältere Schicht,
**dass** weitere Heizkörper (1) zur Anordnung in der ersten Etage über Kugelhähne eingebunden sind,
**dass** das Vorlaufrohr und das Rücklaufrohr der Heizkörper (1 bis 10) in die Vorlaufverteilung (11) eingebunden sind,
**dass** die Einbindung in die Vorlaufverteilung (11) von oben mit einem Abstand von 5 - 10 cm zwischen dem Vorlaufrohr (17) und dem Rücklaufrohr (18) erfolgt,
**dass** weitere Vorlaufrohre (19) in die Vorlaufverteilung (11) eingebunden und ohne Trennstellen in die zweite Etage führbar sind,
**dass** die weiteren Vorlaufrohre (19) oberhalb des Fußbodens anordenbar oder im Fußboden der zweiten Etage verdeckbar sind,
**dass** die weiteren Vorlaufrohre (19) mittels eines weiteren Rücklaufrohrs (20) nach unten geführt und in dieselbe Vorlaufverteilung (11) eingebunden sind und so eine Schleife bilden,
**dass** der minimale Abstand zwischen dem Vorlaufrohr (19) und dem Rücklaufrohr (20) 5-10 cm oder mehr beträgt,
**dass** 1 bis 4 weitere Schleifen mit weiteren Heizkörpern (6, 7 ,8) zur Anordnung in der zweiten Etage vorgesehen sind,
**dass** die Rücklaufverteilung (12) und die Kellerverteilung (23) mittels Abschluss-Strängen (26) zur Anordnung im Keller zu einer Schleife zusammengeschlossen sind,
**dass** weitere Heizkörper (9, 10) an die Rücklaufverteilung (12) und Kellerverteilung (23) über Kugelhähne ohne Trennstellen angeschlossen sind, dass die weiteren Heizkörper (9, 10) über Kugelhähne an Mittelstränge (27) parallel zum Heizkessel unter Trennung des Mittelstrangs angeschlossen sind,
**dass** der Durchmesser der Mittel- und Abschlussstränge (26, 27) mit dem der innenliegenden Stränge (14, 15) im Erdgeschoss identisch ist,
**dass** die Umwälzpumpe (24) in die Kellerverteilung (23) eingebunden ist,
**dass** der Vorlauf der Umwälzpumpe (24) in den Vorlaufstrang (28) oberhalb des Pumpen-Ventilstandmoduls (25) eingebunden ist oder mit dem Hauptheizkessel (22) im Erdgeschoss ein elektrischer Heizkessel (29) aufgestellt ist,
**dass** der Rücklauf des elektrischen Heizkessels (29) an die Rücklaufverteilung (12) angeschlossen ist,
**dass** der Vorlauf des elektrischen Heizkessels (29) oberhalb des Pumpen-Ventilstandmoduls (25) in den Vorlaufstrang (28) eingebunden ist, wobei vorzugsweise der Hauptheizkessel (22) und das Pumpen-Ventilstandmodul (25) zur Anordnung eine Etage tiefer als der elektrische Heizkessel (29) vorgesehen sind, wobei in diesem Fall der Rücklauf des Hauptheizkessels (22) mit der Kellerverteilung (23) verbunden ist, das Vorlaufrohr des Hauptheizkessels (22) über das Pumpenventilstandmodul (25) in den Vorlaufstrang (28) zur Anordnung im Erdgeschoss oberhalb des elektrischen Heizkessels (29) eingebunden ist, wobei im Betrieb des Heizsystems bei ausgeschalteter Umwälzpumpe (24) der Hauptheizkessel (22) netzunabhängig läuft oder das Heizsystem auf Stand-By umstellbar ist, und dass die Wasserbewegung im Keller umgekehrt erfolgt, und zwar von der Einbindestelle des Vorlaufstrangs (28) über das Pumpenventilstandmodul (25) in den Hauptheizkessel (22) und dann in die Kellerverteilung (23), über die weiteren Heizkörper (9), (10) zur Anordnung im Keller in die Rücklaufverteilung (12) und danach in den elektrischen Heizkessel (29), wobei das Heizsystem weiterhin so gestaltet ist,
**dass** ein Fußbodenheizungs-Kreis (30) mit einem kleinen Gefälle verlegt ist,
**dass** beide Enden dieses Fußbodenheizungs-Kreises (30) in die Rücklaufverteilung (12) zur Anordnung im Erdgeschoss und/oder in die Kellerverteilung (23) eingebunden sind oder wobei im Betrieb des Heizsystems das gebrauchte Wasser von der zweiten Etage nutzbar ist, indem das Rücklaufrohr (20) von der zweiten Etage nach unten führbar und an einen Verteiler der Fußbodenheizung (31), der im Erdgeschoss aufbaubar ist, und/oder an einen Verteiler der Fußbodenheizung (31) zur Anordnung im Keller, angeschlossen ist, wobei der Rücklauf des Verteilers (31) an die Rücklaufverteilung (12) zur Anordnung im Erdgeschoss und/oder an die Kellerverteilung (23) angeschlossen ist, und
**dass** der Verteiler (31) mit einem kleinen Gefälle verlegt ist oder das Rücklaufrohr (20) von der zweiten Etage nach unten führbar und in die Rücklaufverteilung (12) zur Anordnung im Erdgeschoss und/oder in die Kellerverteilung (23) eingebunden ist,
**dass** der Vorlauf und der Rücklauf eines ersten Fußbodenheizungsmoduls (32) in das von der zweiten Etage nach unten führbare Rohr (20) ohne Trennung eingebunden sind,
**dass** das Fußbodenheizungsmodul (32) derart vorgesehen ist, dass dieses als geschlossener Kreis, nämlich mit einer Pumpe, zur Anordnung im Erdgeschoss, betreibbar ist, und/oder
**dass** ein zweites Fußbodenheizungsmodul (34) in die Rücklaufverteilung (12) ohne Trennstellen an einer Stelle zur Anordnung horizontal im Erdgeschoss einbindbar ist,
**dass** der Vorlauf des zweiten Fußbodenheizungsmoduls (34) in einem minimalen Abstand von 15 - 20 cm zum Rücklauf in die Rücklaufverteilung (12) eingebunden ist oder das Fußbodenheizungsmodul (34) in die Kellerverteilung (23) eingebunden ist oder nur ein Fußbodenheizungsmodul (34) angeschlossen ist,
**dass** die Wasserströmung aus dem Fußbodenheizungsmodul (34) fließt, dass die Fußbodenheizung eine Umwälzpumpe (24) umfasst
**dass** der Rücklauf des Fußbodenheizungsmoduls (34) in die Rücklaufverteilung (12) und/oder Kellerverteilung (23) im Winkel von 45 Grad eingebunden ist, wobei das Heizsystem weiterhin so ausgestaltet ist,
**dass** Heizkörper (2, 3) zur Anordnung im Erdgeschoss in Stränge eingebunden sind, die die Vorlaufverteilung (11) und die Rücklaufverteilung (12) ohne Trennung des Strangs in eine Schleife zusammenschließen, oder Heizkörper (3, 4) in die Trennstelle des innenliegenden Strangs (14, 15) beziehungsweise der Heizkörper (2) in die Trennstelle des Randstrangs (13) eingebunden ist oder Heizkörper in den jeweiligen Strang (13, 14, 15) so eingebunden sind, dass diese Heizkörper im Betrieb des Heizsystems diagonal durchströmt werden.

2. Heizsystem nach Anspruch 1,
**dadurch gekennzeichnet,**
**dass** am Vorlaufstrang (28), der dem Hauptheizkessel (22) entspringt, zusätzlich ein Pumpen-Ventilstandmodul (25) angebaut ist, das sowohl den Zwangsumlauf als auch den netzunabhängigen Betrieb automatisch sicherstellen kann.

## Claims

1. Heating system for two-, three- and four-storey structures for a house with a basement, first storey, second storey, third storey and floor on the storeys that allows connecting underfloor panel heating, independent of the mains connection, when using multilayer water flow to ensure circulation, with a heating boiler (22) installed on the first storey and/or in the basement, or two heating boilers (22, 29) installed on one of the storeys, while the system has the following features:
- the heating boiler (22) is connected to the distribution unit in the supply pipe line (11) by a supply riser (28),
- the pump-fed valve module (25) is connected to the supply riser (28), which automatically provides forced circulation in the heating system, regardless of the connection to the mains
- the distribution unit in the supply pipeline (11) can be installed above the floor or hidden in the floor of the second storey,
- the distribution unit in the supply pipeline (11) is combined into a loop through a lateral branch (13) and a distribution unit in the return pipeline (12),
- there are at least two such loops with their own individual distribution units, the difference of the system is that the diameter of the pipe in the distribution units is smaller than in the supply riser (28),
an expansion tank (21) is provided,
there is a circulation pump in the basement (24), branches and heating devices, namely, a heating boiler, heating elements (1-10) and/or underfloor panel heating, the heating element (2) on the first storey is connected through ball valves to the lateral branch (13) without splitting the branch (13), and the internal heating elements (3, 4) are connected by ball valves to the internal branches (14, 15) without splitting the branch (14, 15),
the branches (14, 15) join together the distribution unit in the supply pipeline (11) and the distribution unit in the return pipeline (12) in the loop,
additional internal heating elements (3, 4) are installed in parallel to the heating boiler (22),
additional internal heating elements (3, 4) are connected to the internal branch by a ball valve (14, 15),
the diameter of the internal branches (14, 15) is smaller than of the lateral branch (13),
during the operation of the heating system, there are two main flows in distribution units and, usually, in the pipelines, and also hot and cold beds,
additional heating elements (1) to be placed on the second storey are connected by ball valves (14, 15),
the supply pipeline and the drain pipe of the heating element (1-10) are integrated in the distribution unit of the supply pipeline (11),
the distribution unit in the supply pipeline (11) is tied-in from above at a 5-10 cm distance between the supply pipeline (17) and the drain pipe (18),
additional supply pipes (19) are connected to the distribution unit in the supply pipeline (11) and can be led out to the third storey without splitting,
additional supply pipes (19) can be arranged above the floor or hidden in the floor of the third storey,
the additional supply pipes (19) are directed downward through the additional drain pipe (20) and are connected to the same distribution unit in the supply pipeline (11), thus forming a loop,
there is a minimum distance of at least 5-10 cm between the supply pipe (19) and the drain pipe (20),
there are 1 to 4 additional loops to be placed on the third storey with heating elements (6, 7, 8), which are installed later,
the distribution unit in the return pipeline (12) and the distribution unit for the basement (23) are interconnected by terminal branches (26) to be placed in the basement as a loop,
additional heating elements (9, 10) are connected to the distribution unit in the return pipeline (12) and the distribution unit for the basement (23) by ball valves, without splitting,
additional heating elements (9, 10) are connected above the ball valves on the central branches (27) parallel to the heating boiler below the splitting point of the central branch,
the diameter of the central and terminal branch (26, 27) is completely equal to the diameter of the internal branches (14, 15) on the first storey,
the circulation pump (24) is connected to the basement distribution unit (23),
the supply pipeline of the circulation pump (24) is connected to the supply riser (28) above the pump-fed valve module (25) or that the heating boiler (29) is installed with the main heating boiler (22) on the first storey,
the return pipeline of the electric heating boiler (29) is connected to the distribution unit in the return pipeline (12),
the supply pipeline of the electric heating boiler (29) is connected to the supply riser (28) above the pump-fed valve module (25), where the main boiler (22) and the pump-fed valve module (25) are designed for placement preferably one floor below the electric heating boiler (29),
in this case, the return pipeline of the main heating boiler (22) is connected to the basement distribution unit (23), the supply pipeline of the main heating boiler (22) is connected through the pump-fed valve module (25) to the supply riser (28) designed to be placed on the first storey above the electric heating boiler (29), where during the heating system operation with the circulation pump (24) turned off, the main heating boiler (22) operates independently of the mains connection or the heating system can be put into standby mode, while water in the basement circulates in the opposite direction, namely, from the connection to the supply riser (28) through the pump-fed valve module (25) in the main heating boiler (22) and further in the basement distribution unit (23), above the heating elements (9, 10) designed for placement in the basement in the distribution unit of the return pipeline (12) and then in the electric heating boiler (29), while the heating system is designed in a similar way,
the installation of the underfloor heating loop (30) is slightly inclined,
both ends of this underfloor heating loop (30) are connected to the distribution unit in the return pipeline (12) designed to be placed on the first storey and/or in the basement distribution unit (23), or where during the operation of the heating system water from the third storey can be used by running a drain pipe (20) down from the third storey and connecting it to the underfloor heating distribution unit (31), which can be installed on the first storey, and/or to the basement underfloor heating distribution unit (31), where the return pipeline of the distribution unit (31) is connected to the distribution unit in the return pipeline (12) designed for placement on the first storey and/or to the basement distribution unit (23), and
the installation of the distribution unit (31) is slightly inclined, or the drain pipe (20) can be directed downward from the third storey and connected to the distribution unit in the return pipeline (12) designed for placement on the ground floor and/or in the basement distribution unit (23),
the supply and return pipelines of the first underfloor heating module (32) are integrated into a pipe (20) that can be directed downward from the third storey without splitting,
the underfloor heating module (32) is designed so that it can operate in a closed loop with a pump designed for placement on the first storey, and/or
the second underfloor heating module (34) is connected to the distribution unit in the return pipeline (12) without interruptions in the location for horizontal placement on the first storey,
the supply pipe of the second underfloor heating module (34) is connected to a distribution unit in the return pipeline (12) at a minimum distance of 15-20 cm from the return pipeline, or the underfloor heating module (34) is connected to the basement distribution unit (23), or only one underfloor heating module (34) is connected,
water flows out of the underfloor heating module (34), the underfloor panel heating includes the circulation pump (24)
the return pipeline of the underfloor heating module (34) is connected to the distribution unit in the return pipeline (12) and/or to the basement distribution unit (23) at an angle of 45 degrees, and the heating system is designed so that
the heating elements (2, 3) to be placed on the first storey are connected to the branches that connect the distribution unit in the supply pipeline (11) and the distribution unit in the return pipeline (12) without splitting the branch in the loop, or heating elements (3, 4) at the split point of the internal branch (14, 15) or the heating element (2) are connected at the split point of the lateral branch (13), or the heating elements are connected to the respective branch (13, 14, 15) in such a way that these heating elements are diagonal when the heating system is operating.

2. The heating system according to the claim 1
the difference of the system is that
the pump-fed valve module (25) is additionally connected to the supply riser (28) coming from the main heating boiler (22), which can automatically provide forced circulation and operation regardless of the network connection.

## Revendications

1. Système de chauffage pour des constructions à deux, trois et quatre étages pour une maison avec sous-sol, un rez-de-chaussée, un premier étage, un deuxième étage et un plancher à chaque étage, avec la possibilité de raccorder un chauffage par panneaux au sol, indépendant du raccordement au réseau, en utilisant des flux d'eau multicouches pour la circulation, avec une chaudière (22) installée au rez-de-chaussée et/ou au sous-sol, ou deux chaudières (22, 29) installées sur l'un des étages ; le système présente les caractéristiques suivantes :
- la chaudière (22) est reliée à l'unité de distribution dans la conduite d'alimentation (11) au moyen d'une colonne montante d'alimentation (28),
- le module de fonctionnement des vannes avec alimentation par pompe (25) est relié à la colonne montante d'alimentation (28), ce qui assure automatiquement une circulation forcée dans le système de chauffage, indépendamment du raccordement au réseau
- l'unité de distribution dans la conduite d'alimentation (11) peut être installée au-dessus du plancher ou dissimulé dans le plancher du deuxième étage,
- l'unité de distribution dans la conduite d'alimentation (11) est reliée au circuit au moyen d'une branche latérale (13) et d'une unité de distribution dans la conduite de retour (12),
- au moins deux circuits de ce type avec leurs propres unités de distribution sont prévus,
système **caractérisé en ce que** :
le diamètre des tuyaux dans les unités de distribution est plus petit par rapport à la colonne montante d'alimentation (28),
un réservoir de compensation (21) est prévu,
une pompe de circulation dans le sous-sol (24), des branches et des appareils de chauffage, à savoir une chaudière, des éléments chauffants (1-10) et/ou un chauffage par panneaux au sol sont prévus,
l'élément chauffant (2) du rez-de-chaussée est relié par des vannes à bille à la branche latérale (13) sans séparation de branche (13) et les éléments chauffants internes (3, 4) sont reliés par des vannes à bille aux branches internes (14, 15) sans séparation de branche (14, 15),
les branches (14, 15) relient l'unité de distribution dans la conduite d'alimentation (11) et l'unité de distribution dans la conduite de retour (12) l'un à l'autre dans le circuit,
les autres éléments chauffants internes (3, 4) sont installés en parallèle à la chaudière (22),
les autres éléments chauffants internes (3, 4) sont reliés à la branche interne au moyen d'une vanne à bille (14, 15),
le diamètre des branches intérieures (14, 15) est inférieur à celui de la branche latérale (13),
pendant le fonctionnement du système de chauffage deux flux principaux dans les unités de distribution et, généralement, dans les conduites, ainsi que des couches chaude et froide sont prévus,
les autres éléments chauffants (1) à placer au deuxième étage sont reliés au moyen de vannes à bille,
les conduites d'alimentation et d'évacuation de l'élément chauffant (1-10) sont intégrées dans l'unité de distribution dans la conduite d'alimentation (11),
l'unité de distribution doit être inséré dans la conduite d'alimentation (11) par le haut avec une distance de 5-10 cm entre la conduite d'alimentation (17) et la conduite d'évacuation (18),
les conduites d'alimentation supplémentaires (19) sont raccordées à l'unité de distribution dans la conduite d'alimentation (11) et peuvent être acheminés vers le deuxième étage sans séparation,
les conduites d'alimentation supplémentaires (19) peuvent être disposées au-dessus du plancher ou dissimulées dans le plancher du deuxième étage,
les conduites d'alimentation supplémentaires (19) sont dirigées vers le bas au moyen d'une conduite d'évacuation supplémentaire (20) et raccordées à la même l'unité de distribution dans la conduite d'alimentation (11), formant ainsi un circuit,
une distance minimale de 5 à 10 cm ou plus est prévue entre la conduite d'alimentation (19) et la conduite d'évacuation (20),
1 à 4 circuits supplémentaires avec des éléments chauffants installés ultérieurement (6, 7, 8) sont prévus pour être placés au deuxième étage,
l'unité de distribution dans la conduite de retour (12) et l'unité de distribution au sous-sol (23) sont reliées l'un à l'autre au moyen de branches de terminaison (26) pour être placés dans le sous-sol sous la forme d'un circuit,
les éléments chauffants supplémentaires (9, 10) sont reliés à l'unité de distribution dans la conduite de retour (12) et à l'unité de distribution du sous-sol (23) au moyen de vannes à bille sans séparation,
les éléments chauffants supplémentaires (9, 10) sont reliés au-dessus des vannes à bille sur les branches centrales (27) en parallèle à la chaudière sous la séparation de la branche centrale,
le diamètre des branches centrale et d'arrêt (26, 27) coïncide entièrement avec les branches internes (14, 15) du rez-de-chaussée,
la pompe de circulation (24) est reliée à l'unité de distribution pour le sous-sol (23),
la conduite d'alimentation de la pompe de circulation (24) est raccordée à la colonne montante d'alimentation (28) au-dessus du module de fonctionnement des vannes avec alimentation par pompe (25) ou la chaudière (29) est installée avec la chaudière de chauffage principale (22) au rez-de-chaussée,
la conduite de retour de la chaudière de chauffage électrique (29) est raccordée à l'unité de distribution dans la conduite de retour (12),
la conduite d'alimentation de la chaudière de chauffage électrique (29) est raccordée à la colonne montante d'alimentation (28) au-dessus du module de fonctionnement de la vanne avec alimentation par pompe (25), où la chaudière de chauffage principale (22) et le module de fonctionnement de la vanne avec alimentation par pompe (25) sont prévus pour être placés de préférence un étage en dessous de la chaudière de chauffage électrique (29),
dans ce cas, la conduite de retour de la chaudière de chauffage principale (22) est raccordée à l'unité de distribution (23), la conduite d'alimentation de la chaudière de chauffage principale (22) est raccordée, via le module de fonctionnement des vannes avec alimentation par pompe (25), à la conduite montante d'alimentation (28) pour être placée au rez-de-chaussée au-dessus de la chaudière de chauffage électrique (29), où pendant le fonctionnement système du chauffage avec la pompe de circulation arrêtée (24), la chaudière de chauffage principale (22) fonctionne indépendamment du raccordement au réseau ou le système de chauffage peut être mis en mode veille, la circulation de l'eau dans le sous-sol s'effectuant en sens inverse, c'est-à-dire du point de raccordement avec la colonne montante d'alimentation (28) via le module de fonctionnement des vannes avec alimentation par pompe (25) dans la chaudière de chauffage principale (22) et ensuite dans l'unité de distribution pour le sous-sol (23), au-dessus les éléments chauffants (9, 10) à placer au sous-sol dans le bloc de distribution dans la conduite de retour (12) et ensuite dans la chaudière de chauffage électrique (29), le système de chauffage étant conçu de cette manière,
le circuit de chauffage par panneaux au sol (30) est installé avec une légère pente, les deux extrémités de ce circuit de chauffage par panneaux au sol (30) sont reliées à l'unité de distribution dans la conduite de retour (12) pour être placées au rez-de-chaussée et/ou dans l'unité de distribution pour le sous-sol (23), ou bien où, pendant le fonctionnement du système de chauffage, l'eau du deuxième étage peut être utilisée en faisant descendre la conduite d'évacuation (20) du deuxième étage et en la raccordant à l'unité de distribution du chauffage par panneaux au sol (31) qui peut être installée au rez-de-chaussée, et/ou à l'unité de distribution de chauffage par panneaux au sol (31) pour être placée dans le sous-sol, où la conduite de retour de l'unité de distribution (31) est raccordée à l'unité de distribution dans la conduite de retour (12) pour être placé au rez-de-chaussée et/ou à l'unité de distribution pour le sous-sol (23), et
l'unité de distribution (31) est instalée sur une légère pente, ou la conduite d'évacuation (20) peut être dirigée vers le bas à partir du deuxième étage et raccordée au bloc de distribution dans la conduite de retour (12) pour être placée au rez-de-chaussée et/ou dans l'unité de distribution pour le sous-sol (23),
les conduites d'alimentation et de retour du premier module de chauffage par paneaux au sol (32) sont intégrées dans le tuyau (20), qui peut être dirigé vers le bas depuis le deuxième étage sans séparation,
le module de chauffage par panneaux au sol (32) est prévu de manière à pouvoir fonctionner en circuit fermé avec une pompe, à être placé placer au rez-de-chaussée, et/ou
le deuxième chauffage par panneaux au sol du premier étage (34) est raccordée à l'unité de distribution dans la conduite de retour (12) sans discontinuité au point de raccordement pour être placée en position horizontale au rez-de-chaussée,
la conduite d'alimentation du deuxième module de chauffage par panneaux au sol (34) est raccordée à l'unité de distribution dans la conduite de retour (12) à une distance minimale de 15-20 cm de la conduite de retour, ou le module de chauffage par panneaux au sol (34) est raccordé à l'unité de distribution pour le sous-sol (23), ou un seul module de chauffage par panneaux au sol (34) est raccordé,
l'eau s'écoule à partir du module de chauffage par panneaux au sol (34), le chauffage par panneaux au sol comprend une pompe de circulation (24)
la conduite de retour du module de chauffage par panneaux au sol (34) est raccordée à l'unité de distribution dans la conduite de retour (12) et/ou à l'unité de distribution pour le sous-sol (23) sous un angle de 45 degrés, le système de chauffage étant ainsi conçu,
les éléments chauffants (2, 3) à être placés au rez-de-chaussée sont raccordés aux branches qui relient l'unité de distribution dans la conduite d'alimentation (11) et l'unité de distribution dans la conduite de retour (12) sans séparation de la branche dans le circuit, ou les éléments chauffants (3, 4) au point de séparation de la branche interne (14, 15) ou des éléments chauffants (2) sont raccordés au point de séparation de la branche latérale (13), ou les éléments chauffants sont raccordés à la branche respective (13, 14, 15) de sorte que ces éléments chauffants fonctionnent en diagonale lorsque le système de chauffage est en marche.

2. Système de chauffage selon Demande de brevet 1
système **caractérisé en ce que** :
à la colonne montante d'alimentation (28) provenant de la chaudière de chauffage principale (22) est raccordé en plus un module de fonctionnement des vannes avec alimentation par pompe (25), ce qui peut assurer automatiquement la circulation forcée et le fonctionnement indépendamment du raccordement au réseau.
